# EUROPEAN PATENT APPLICATION

(11) **EP 1 138 560 A1**
(43) Date of publication of application: **04.10.2001**
(21) Application number: 99922534.5
(22) Date of filing: 28.05.1999
(51) Int. Cl.: B60R 22/10

(54) **SEAT BELT AUXILIARY DEVICE**

(30) Priority: 09.12.1998 JP 35044998
(71) Applicant: Shimizu, Hideteru, Tokyo 194-0033 (JP)
(72) Inventor: Shimizu, Hideteru, Tokyo 194-0033 (JP)
(74) Representative: HOFFMANN - EITLE
(86) International application number: JP9902816
(87) International publication number: WO0034086

(57) **Abstract**

A seat belt auxiliary device being compact, easy in transportation, and capable of protecting infants safely by using it together with an existing seat belt, comprising a first belt member (1) which is inverted near a venter part located at a main body front part after passing from near the waist side located at the main body rear part to one shoulder part, tied to itself near the waist side located at the rear part after passing over the other shoulder part, and expanded to near the venter part located at the front part after passing a hip joint located at a body lower part and a pair of detachable connecting members (5, 7) installed at an inversion part located on the venter part of the first belt member and near the end pact expanded to near the venter part located at the front part after passing the hip joint, wherein a platy elastic member (20) which is expanded from near both shoulder parts of the main body rear part to near the waste part and has an elasticity in bending direction and of which rear surface side is supported forward by the first belt member expanded to the main body both shoulder parts should be preferably installed additionally.

## Description

### Technical Field

This invention relates to an auxiliary seat belt and, more particularly, to an auxiliary seat belt (child's seat belt) that is capable of safely protecting a child or youth (referred to simply as a "child" below) against accident by being used in conjunction with a seat belt, which is installed in a vehicle (an automobile, train, airplane, ship, etc.).

Automobile seat belts the wearing of which is now mandatory are effective in mitigating injury at the time of a traffic accident. Though existing seat belts are satisfactory when they are used by an adult having a standard build, there are not a few instances where such seat belts are useless. For example, since a child or the like has a small build and changes his or her posture in various ways even when seated, the child's body may slip out of the seat belt in an emergency. In this respect, so-called child seats are effective in mitigating child injury and even the National Police Agency is working for their widespread use. Legislation for making the wearing of such auxiliary seat belts (child seats, etc.) mandatory is being discussed.

### Background Art

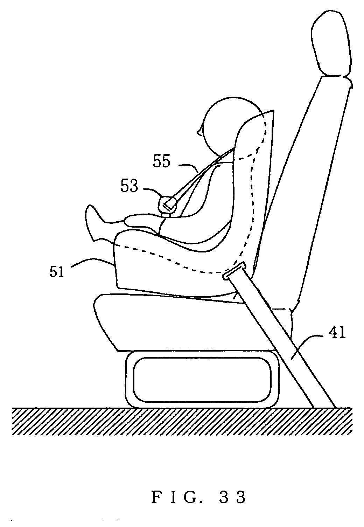

Fig. 33 is a diagram useful in describing the prior art and illustrates an example of a child seat according to the prior art. A child seat 51 is placed on the front seat of an automobile and is secured to the seat by a required (specified or installed) seat belt 41. The child seat 51 is equipped with a pole member 53 upstanding from between the thighs of a child or the like, and two supplementary belts 55 extending from the back of the child seat 51 to the front thereof over both shoulders of the child. In use, the child sits down in the child seat 51 and the supplementary belts 55 are connected to a buckle or the like at the distal end of the pole member 53, whereby the child can be restrained safely facing forward in the direction in which the automobile travels.

However, the child seat 51 not only is unwieldy in terms of size but is not easy to secure and to detach from the seat. Though there are cases where a privately owned automobile can be permanently provided with a child seat, the child seat cannot be used easily in the case of another person's automobile or taxi. In addition, making the permanent installation of the child seat 51 mandatory in a commercial vehicle such as a taxi also involves operational problems.

### Disclosure of the Invention

The present invention has been devised in view of the problems of the prior art mentioned above and its object is to provide an auxiliary seat belt that is compact and easy to carry and capable of safely protecting a child or the like by being used in conjunction with an existing seat belt.

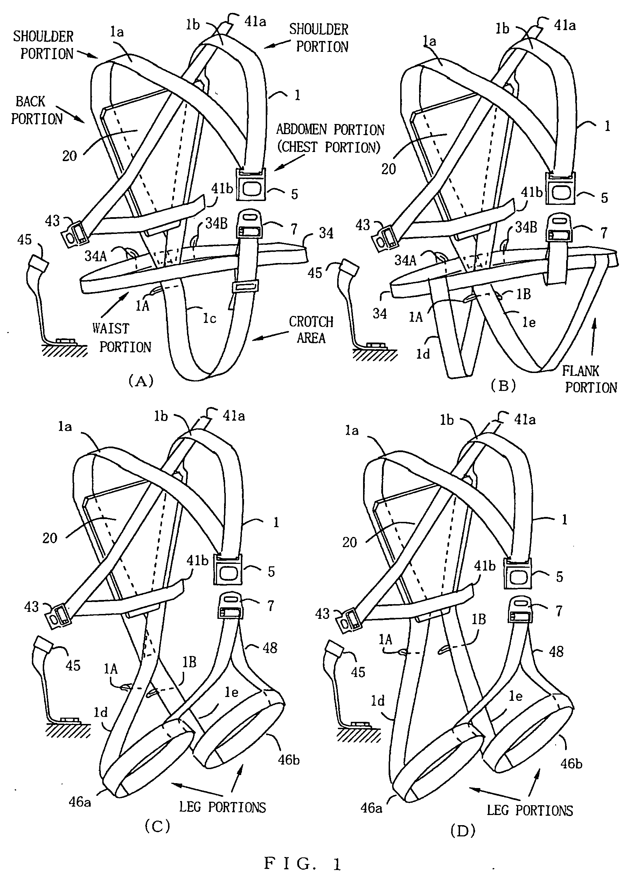

The above-mentioned problem is solved by the arrangement of Fig. 1(A). Specifically, an auxiliary seat belt according to claim 1 of the present invention is an auxiliary seat belt used in cooperation with an existing seat belt 41 for restraining the body of a user, the auxiliary seat belt having: a first belt member 1 that passes over one shoulder from the vicinity of a waist side at a back portion of a main body, reverses direction in the vicinity of an abdomen portion at the front, passes over the other shoulder, is joined to itself in the vicinity of the waist side at the back portion and develops into an abdomen portion at the front upon passing through a crotch area at a lower portion of the main body; and a pair of freely attachable and detachable connecting members 5, 7, one being provided on the portion of the first belt member 1 at which the first belt member reverses direction at the abdomen, and the other being provided near the end of the first belt member that develops into the abdomen portion at the front upon passing through the crotch area.

In claim (1) of the present invention, the skeletal structure of the auxiliary seat belt comprises the flexible first belt member (webbing) 1 and small connecting members 5, 7, and therefore the auxiliary seat belt can be folded up compactly and carried about with ease. Further, owing to an arrangement that allows a child, etc., to put on the auxiliary seat belt in advance and to move about freely, the child can be protected safely utilizing an already provided seat belt (e.g., an already existing seat belt 41 is passed across the inner side of the back) in any type of vehicle and on any seat. Moreover, what applies the feeling of restraint to the child in this case is not the already existing seat belt 41 but the auxiliary seat belt that is fitted to the child's body. As a result, the child can change his or her posture with comparative freedom. Furthermore, owing to the arrangement in which the connecting members 5, 7 are detachably connected at a single location, namely at the abdomen, it is possible for the child himself or for the driver, etc., alongside to operate the connecting members 5, 7 easily. In addition, in case of an emergency such as a fire, the child can be allowed to flee immediately merely by disconnecting the connecting members 5, 7 without disconnecting buckles 43, 45 of the already existing seat belt 41. Further, the first belt member 1 preferably comprises a single belt webbing. As a result, sufficient strength is obtained not only for the portions which support the connecting members 5, 7 but also for the overall auxiliary seat belt.

The above-mentioned problem is solved by the arrangement of Fig. 1(B). Specifically, the auxiliary seat belt according to claim 2 of the present invention is an auxiliary seat belt used in cooperation with an existing seat belt 41 for restraining the body of a user, the auxiliary seat belt having: a first belt member 1 that passes over a crotch area at a lower portion of a main body, a back portion and either shoulder from one flank on a front side of the main body, reverses direction in the vicinity of an abdomen portion at the front, passes over the other shoulder, the back portion and the crotch area and develops into another flank; a second belt member 34 that is joined to the first belt member 1 in the vicinity of a waist side at the back portion of the main body, extends laterally and develops into the abdomen side, the second belt member being joined at points therealong to each end of the first belt member 1 at both flanks; and a pair of freely attachable and detachable connecting members 5, 7, one being provided on the portion of the first belt member 1 at which the first belt member reverses direction at the abdomen, and the other being provided at an intermediate portion of the second belt member 34.

In claim (2) of the present invention, two belt members 1d, 1e that develop into the crotch area of the main body are connected to the second belt member 34 at both flanks. As a result, when the user wears the auxiliary seat belt, the user is not directly restrained at the crotch by the belt members 1d, 1e. Further, at the time of an collision with a vehicle or the like, the belt members 1d, 1e both tend to be pulled outward (in the directions of both flanks). As a result, the body of a user that is thrown forward from the waist is supported (restrained) in the vicinity of both buttocks (both legs) with good balance by the belt members 1d, 1e. The load that supports the weight (acceleration) of the user is lightened greatly not only for the user but also for the belt members 1d, 1e. The crotch of the user is protected as well.

Fig. 1(B) illustrates a case where the auxiliary seat belt starts from the left (the right side in the drawing) flank, passes over the right shoulder, reverses direction at the front in the vicinity of the abdomen, passes over the left shoulder and develops into the right flank. However, this does not impose a limitation. An arrangement may be adopted in which the auxiliary seat belt starts from the left (the right side in the Figure) flank, passes over the left shoulder, reverses direction at the front in the vicinity of the abdomen, passes over the right shoulder and develops into the right flank.

The above-mentioned problem is solved by the arrangement of Fig. 1(C) or (D). Specifically, the auxiliary seat belt according to claim 3 of the present invention is an auxiliary seat belt used in cooperation with an existing seat belt 41 for restraining the body of a user, the auxiliary seat belt having: a first belt member 1 that passes over either shoulder from the vicinity of one leg portion on a back side of a main body, reverses direction in the vicinity of an abdomen portion at the front, passes over the other shoulder and develops into the other leg; third and fourth belt members 46a, 46b annularly provided on respective ones of the two leg portions of the first belt member 1; a fifth belt member 48 bridging the third and fourth belt members 46a, 46b and having an intermediate portion that is capable of developing into an abdomen portion on a front side of the main body; and a pair of freely attachable and detachable connecting members 5, 7, one being provided on the portion of the first belt member 1 at which the first belt member reverses direction at the abdomen, and the other being provided at the intermediate portion of the fifth belt member 48.

In accordance with claim (3) of the present invention, the arrangement is such that both legs (thighs) are restrained by respective ones of the third and fourth belt members 46a, 46b. As a result, the body of a user that is thrown forward at the time of a collision with a vehicle or the like can be restrained at both legs with good balance.

Preferably, in claim (4) of the present invention, the auxiliary seat belt of claim (1) or (3) of the present invention is further provided with a second belt member 34 that is joined to the first belt member in the vicinity of a waist side at the back portion of the main body, extends laterally and develops into the abdomen side.

Accordingly, the body of the user can be protected more safely (with greater versatility) and it is possible to effectively prevent a situation in which the body of the user is thrown laterally from the main body of the auxiliary seat belt.

Preferably, in claim (5) of the present invention, the first belt member 1 in claims (1) to (4) of the present invention comprises a union of a plurality of belt members.

The skeletal structure of the first belt member 1 can be strongly constructed even if the plurality of belt members are joined (sewn, riveted, etc.) anywhere in the longitudinal direction.

Preferably, in claim (6) of the present invention, at least a portion of the second belt member 34 in claim (2) or (4) of the present invention is folded over in a direction crossing the longitudinal direction thereof, and opposing surfaces of the folded-over portion are joined together so as to be pulled apart by tension applied in the longitudinal direction.

For example, in Fig. 1A, fused belt portions 34A, 34B which construct claim (6) of the present invention are provided at two locations having left-right symmetry in the vicinity of the base of second belt member 34. Though the body of the user is thrown forwardly suddenly at the time of a collision with a vehicle or the like, the fused belt portions 34A, 34B pull apart (e.g., the sewing threads at each level are cut in regular order) by the load that acts upon the second belt member 34 at this time, whereby the violent acceleration that acts upon the user can be mitigated (absorbed) in stages. As a result, even if the overall length of the second belt member 34 increases somewhat, the body of the user will be protected (restrained) safely within limits in which the user will not strike the dashboard or the like at the front of the vehicle.

Preferably, in claim (7) of the present invention, at least a portion of the first belt member 1 in claims (1) to (6) of the present invention is folded over in a direction substantially crossing the longitudinal direction thereof, and opposing surfaces of the folded-over portion are joined together so as to be pulled apart by tension applied in the longitudinal direction.

For example, in Fig. 1A, a fused belt portion 1A which constructs claim (7) of the present invention is provided at one location in the vicinity of the base of a first belt member 1c. At the time of a collision with a vehicle or the like, the fused belt portion 1A is pulled apart (e.g., the sewing threads at each level are cut in regular order) by the load that acts upon the first belt member 1c, whereby the violent acceleration that acts upon the user can be mitigated (absorbed) in stages. As a result, even if the portion of the first belt member 1c stretches somewhat, the body of the user will be protected (restrained) safely within limits in which the user will not strike the dashboard or the like at the front of the vehicle.

Preferably, in claim (8) of the present invention, the auxiliary seat belt of claims (1) to (7) of the present invention is further provided with a plate-shaped resilient member 20 that develops into a waist portion from the vicinity of both shoulders of the back portion of the main body and that exhibits elasticity in a bending direction, a back side thereof being supported in a forward-facing direction by first belt members 1a, 1b that develop into both shoulders of the main body.

In accordance with claim (8) of the present invention, the first belt members 1a, 1b that develop into both shoulders of the main body and already existing seat belts 41a, 41b cross each other via the intermediate plate-shaped resilient member 20. As a result, the auxiliary seat belt is restrained on the side of the seat back in a safe attitude (posture) at all times. This means that the user (child, etc.) can be restrained in a safe forward-facing posture without loss of freedom at all times. Further, the body of the user can be restrained stably at the back so as not to face toward the side at the time of a collision with a vehicle or the like. At such time the resilient member 20, which is tensioned strongly in the forward direction by the first belt members 1a, 1b, 1c, is curved and bent in the respective directions, as a result of which the violent acceleration that acts upon the body of the user can be mitigated (absorbed) rapidly.

Preferably, in claim (9) of the present invention, the resilient member of claim (8) of the present invention comprises a laminate of a plurality of plate-shaped members having different characteristics.

For example, an inner plate-shaped member having strong resilience with respect to bending is sandwiched by nonflammable outer plate-shaped members that will not easily crack, thereby making it possible to obtain a safe, strongly resilient flexible structure overall. Alternatively, by overlapping plate-shaped members having various flexibility characteristics, it is possible to obtain a desired flexibility characteristic overall.

Preferably, in claim (10) of the present invention, the vicinity of a shoulder side of the back portion of the main body or the vicinity of the abdomen portion in claims (1) to (9) of the present invention is provided with a belt passing member through which an existing seat belt 41 is passed for restraining the seat belt 41 to the side of the main body.

Accordingly, the auxiliary seat belt in this case is restrained in a constant attitude at all times by the already existing seat belts 41a, 41b, and a high degree of safety can be maintained.

### Brief Description of the Drawings

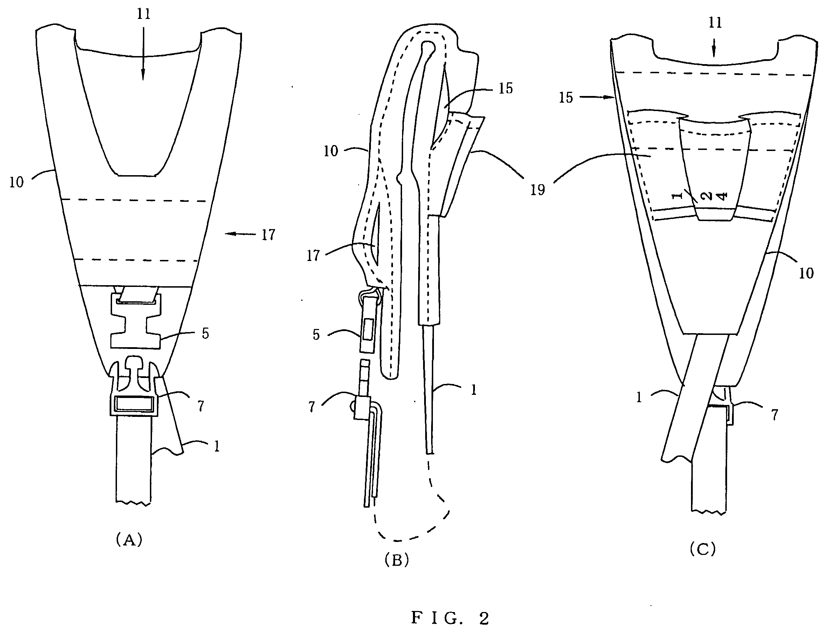

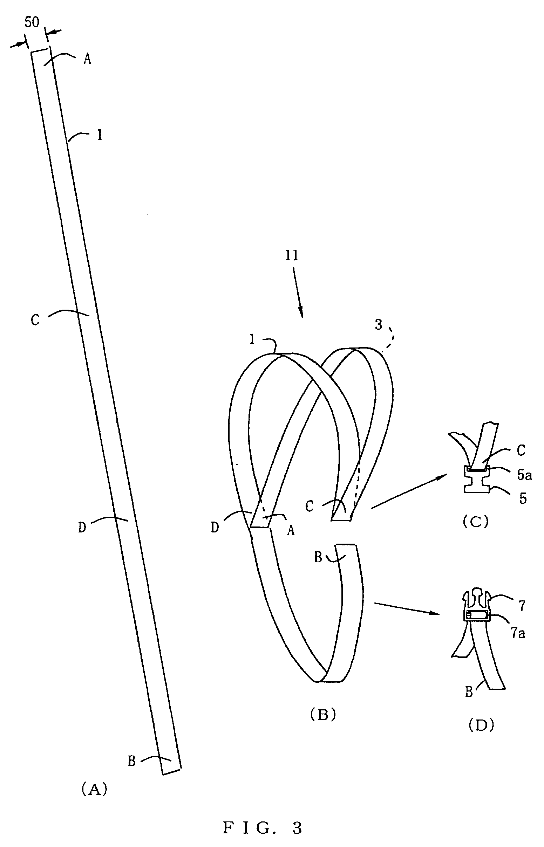

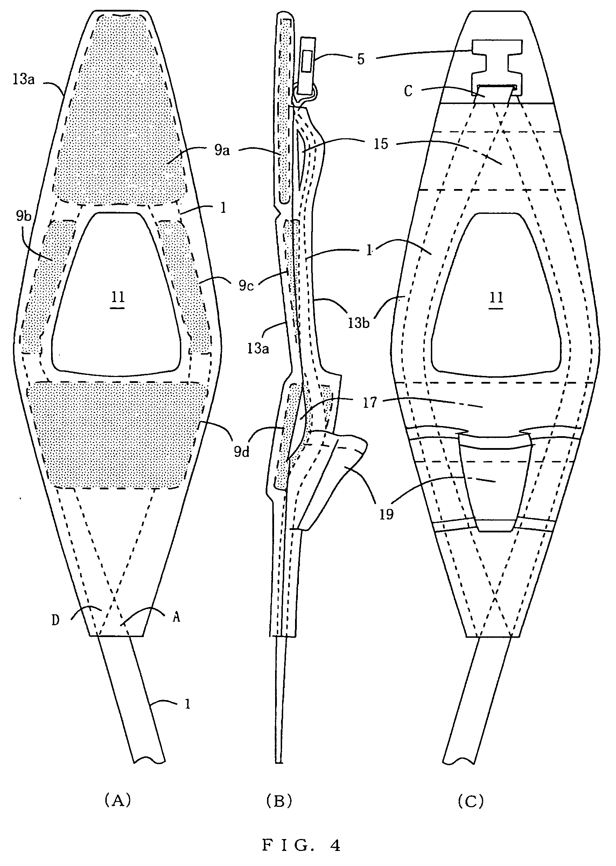

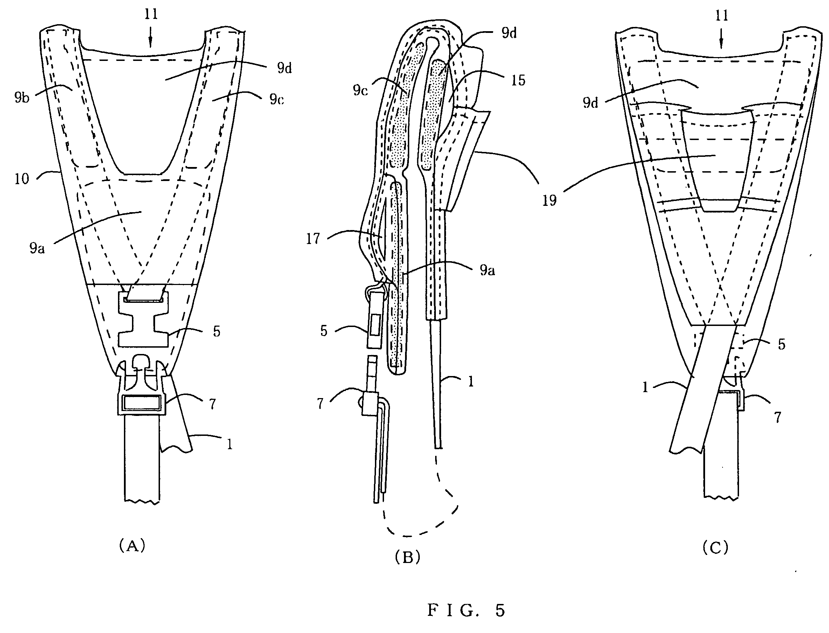

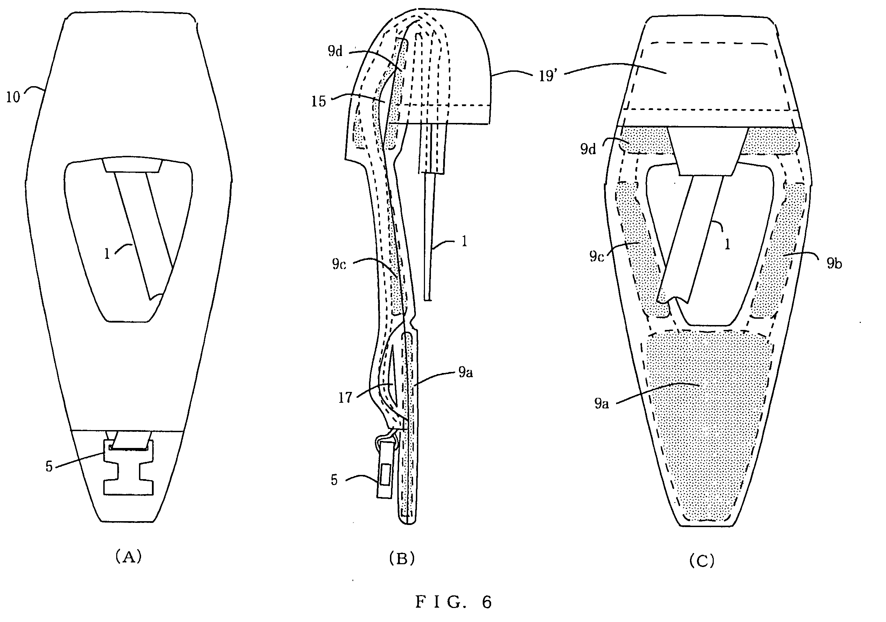

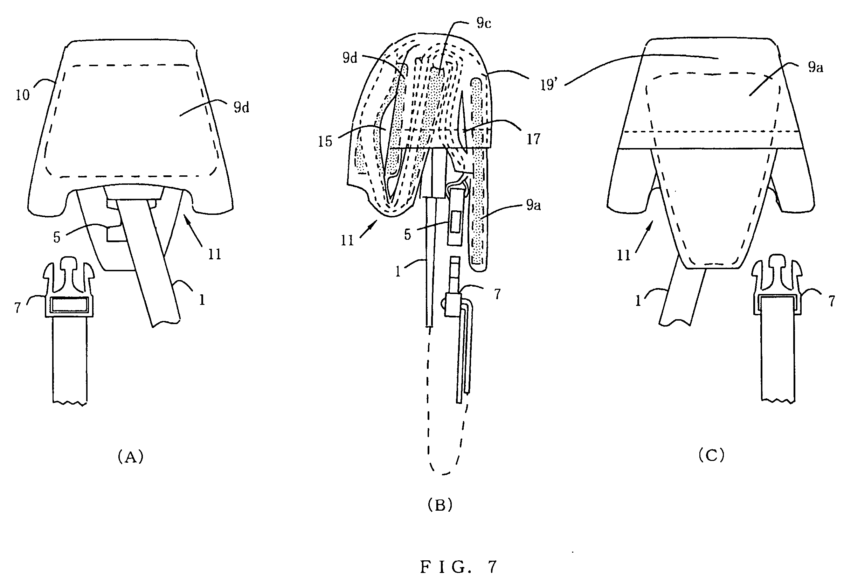

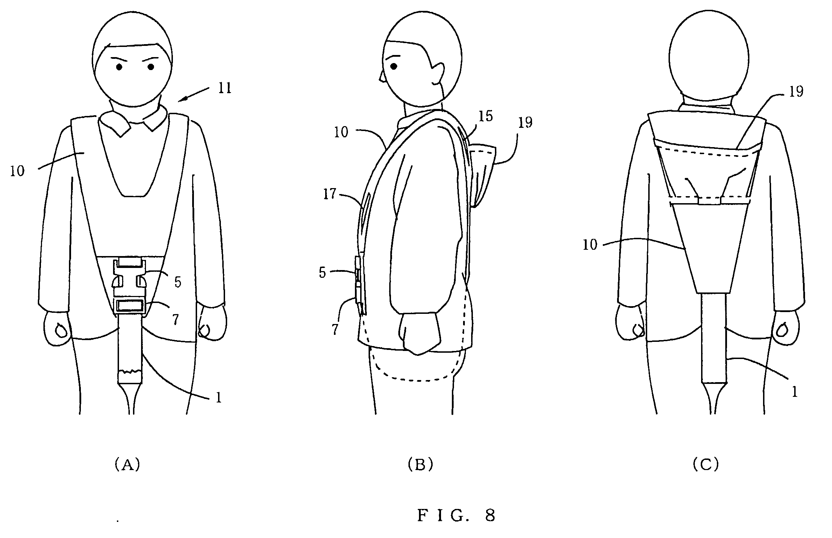

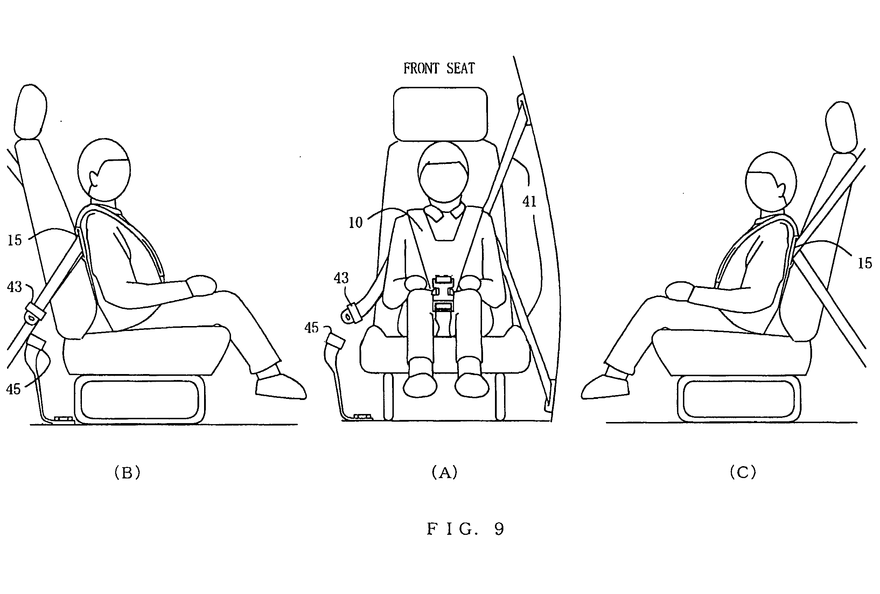

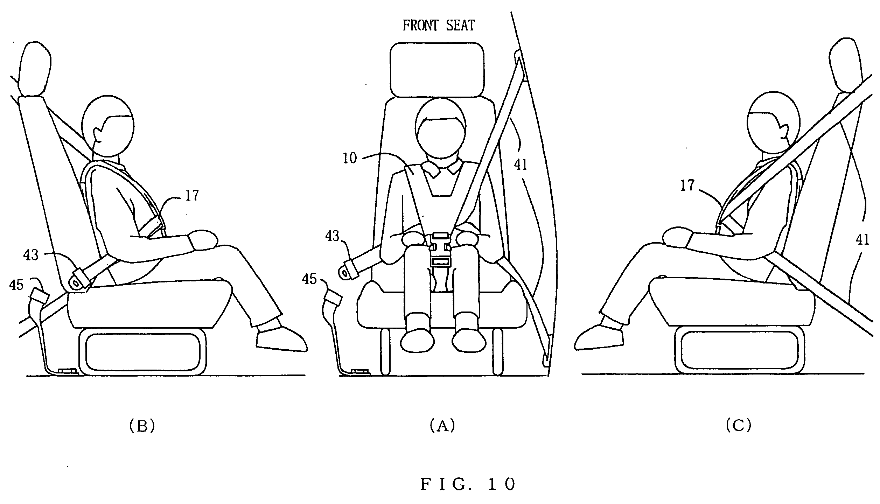

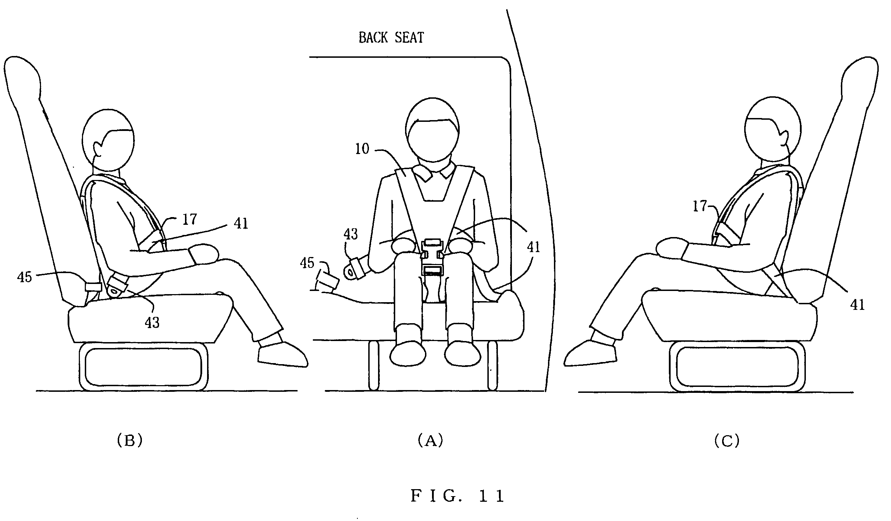

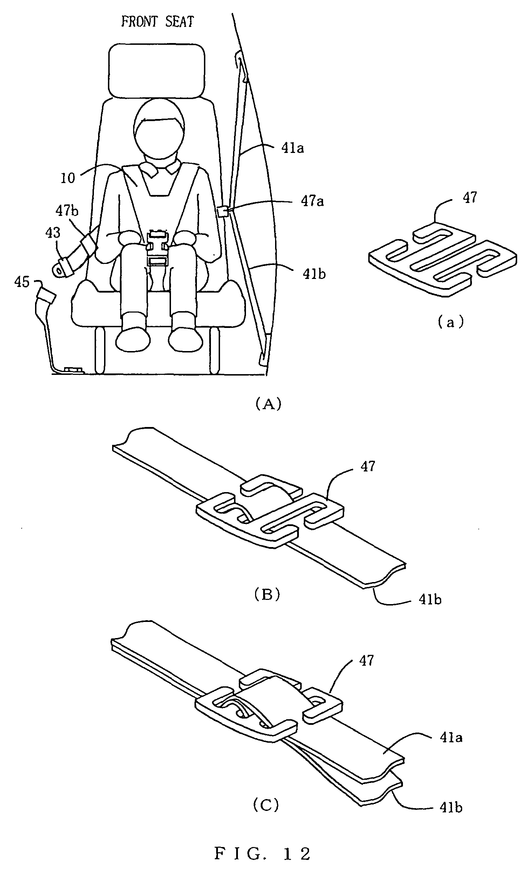

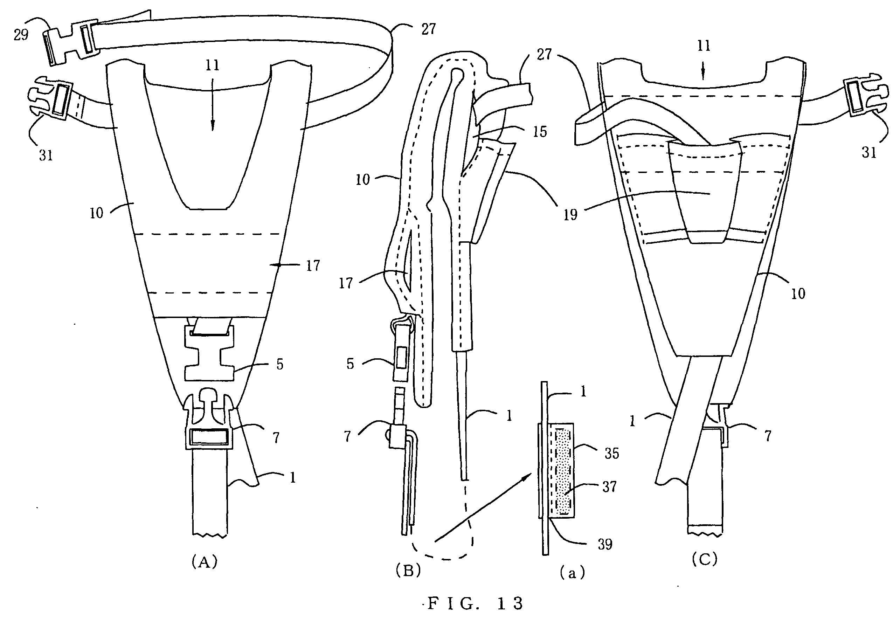

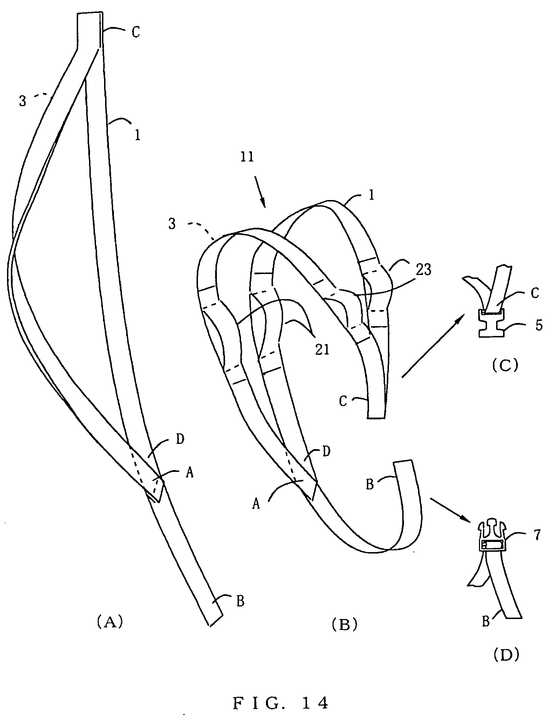

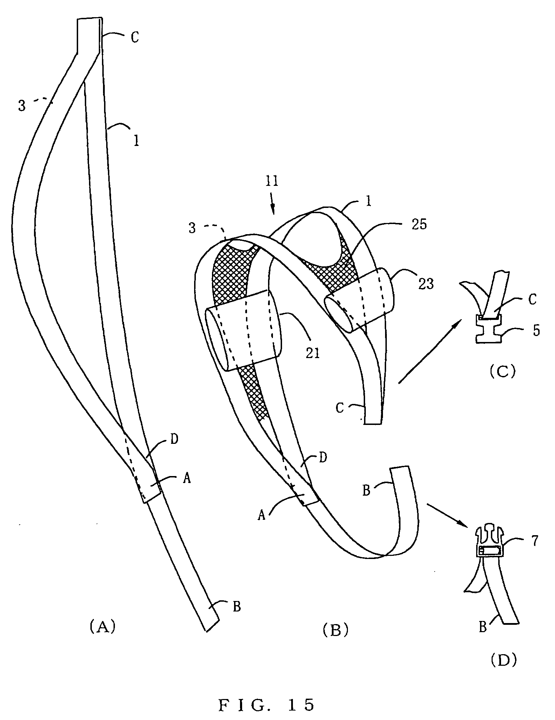

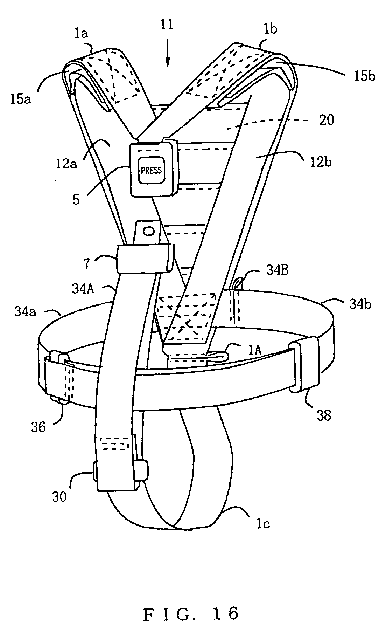

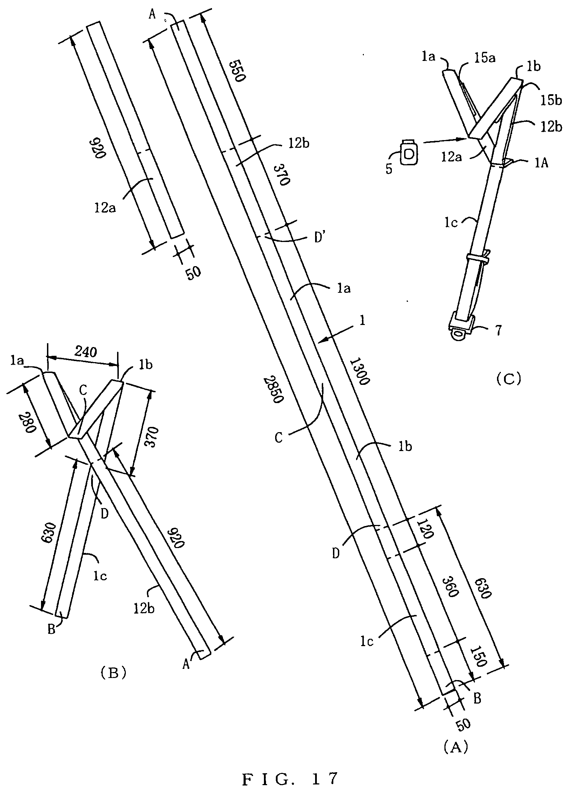

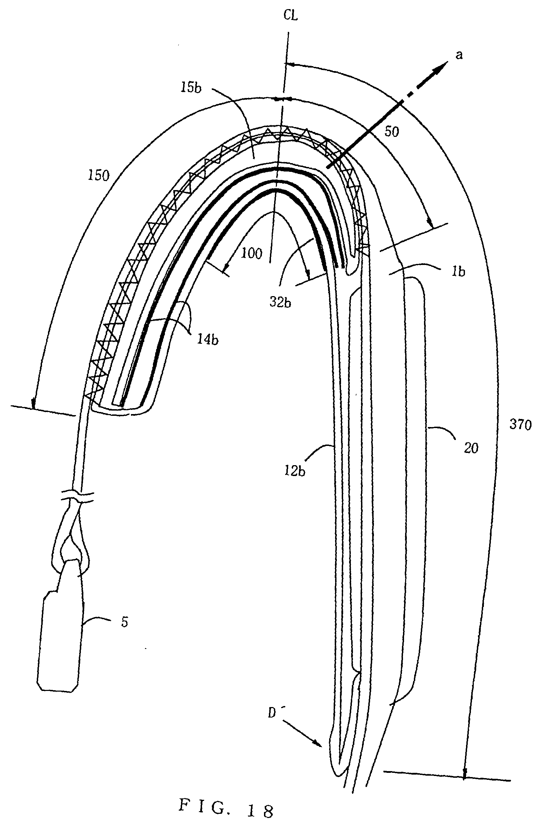

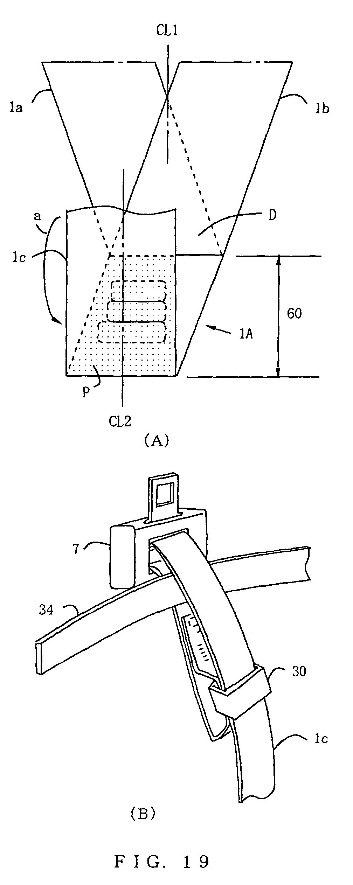

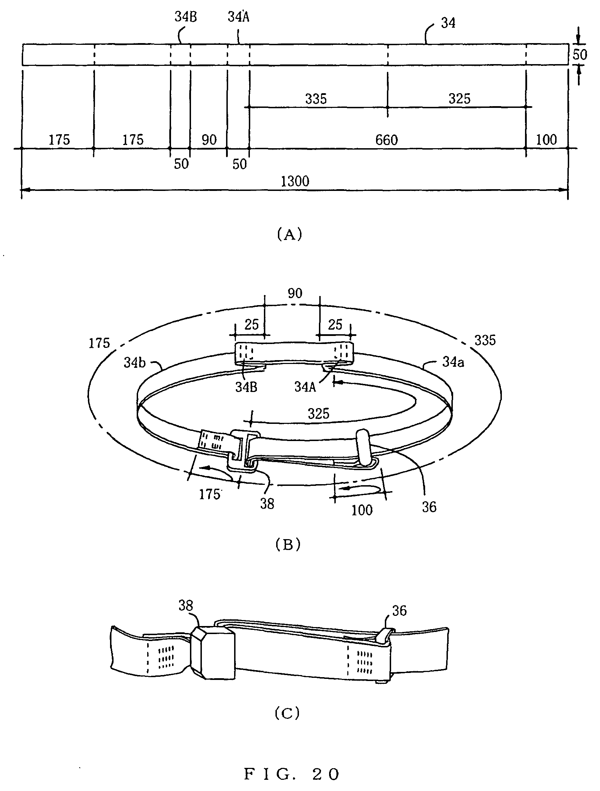

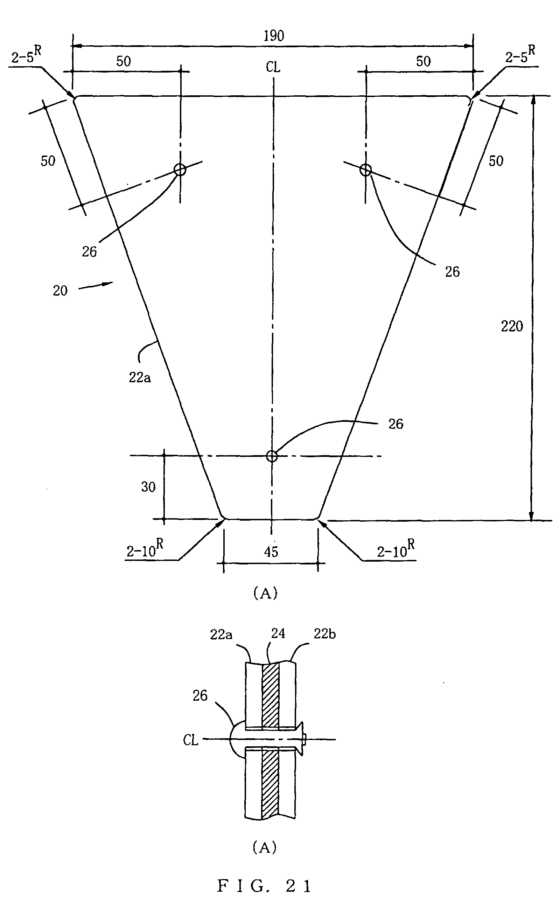

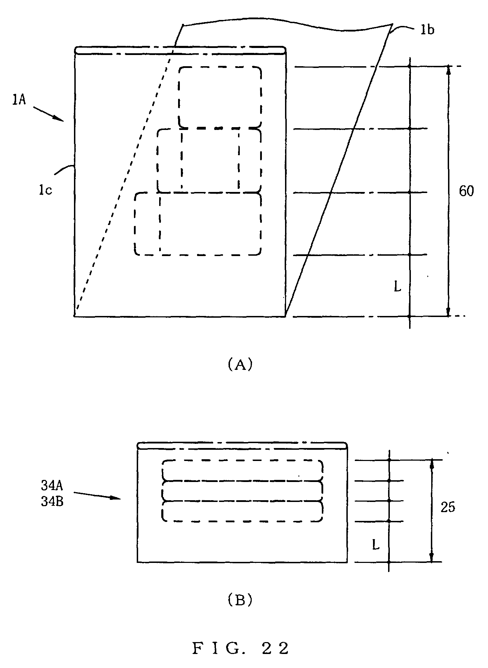

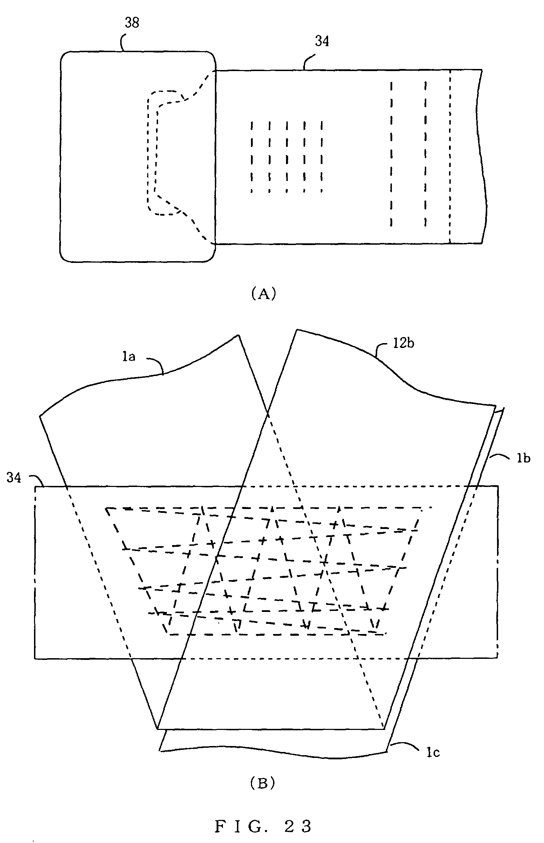

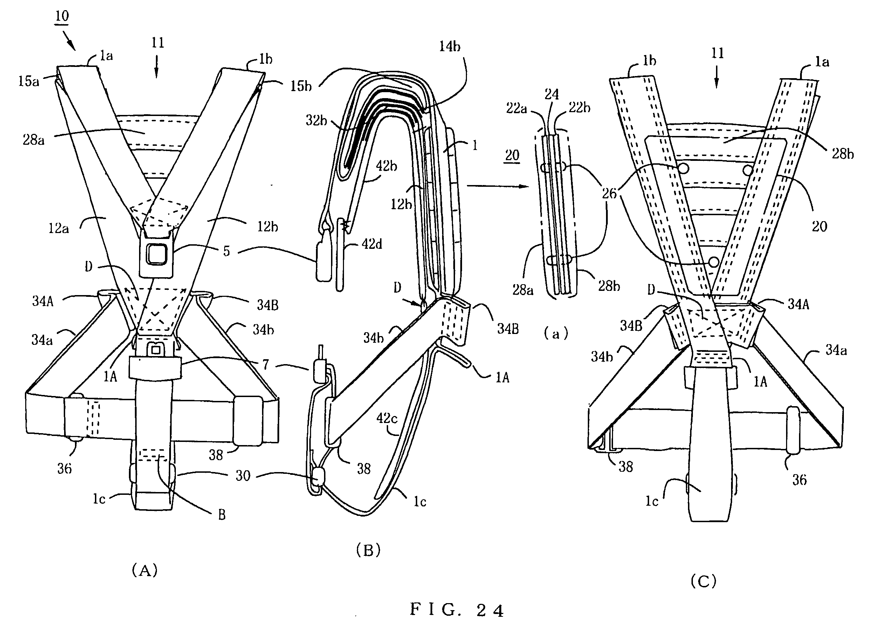

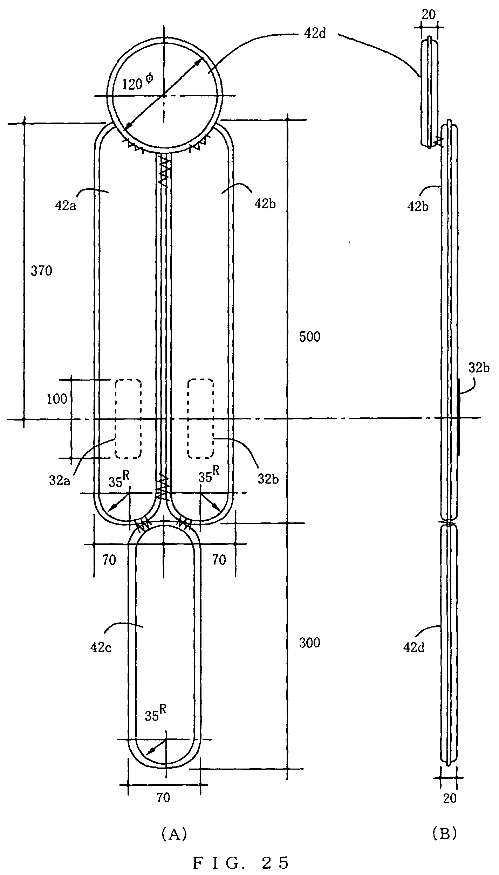

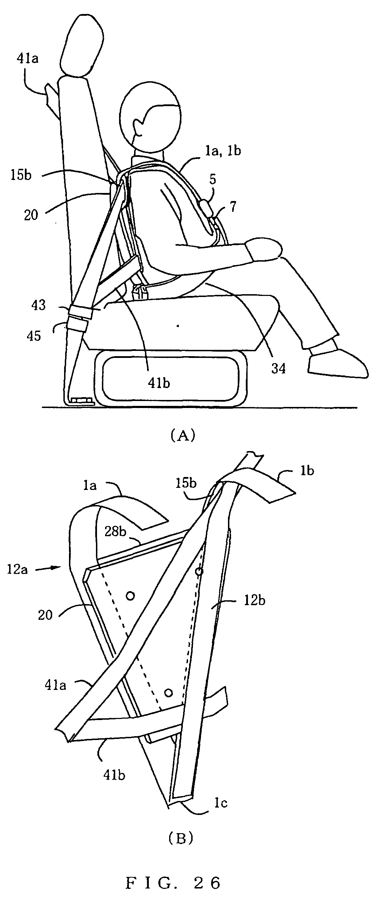

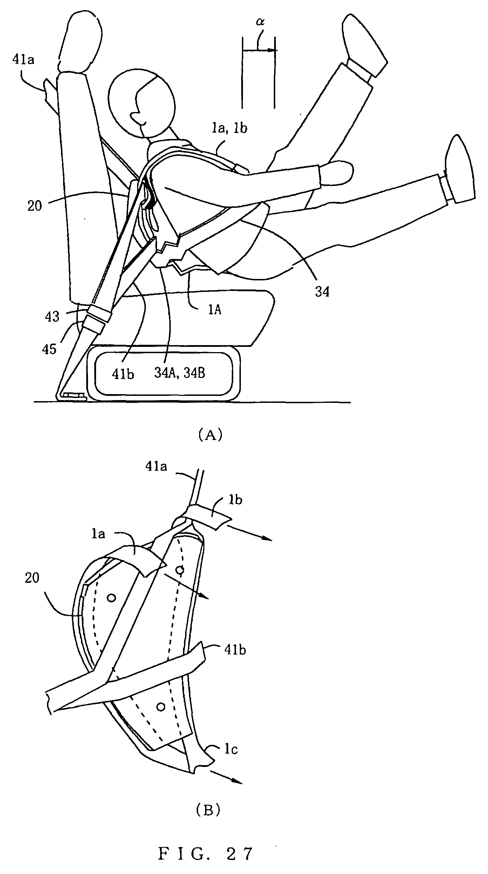

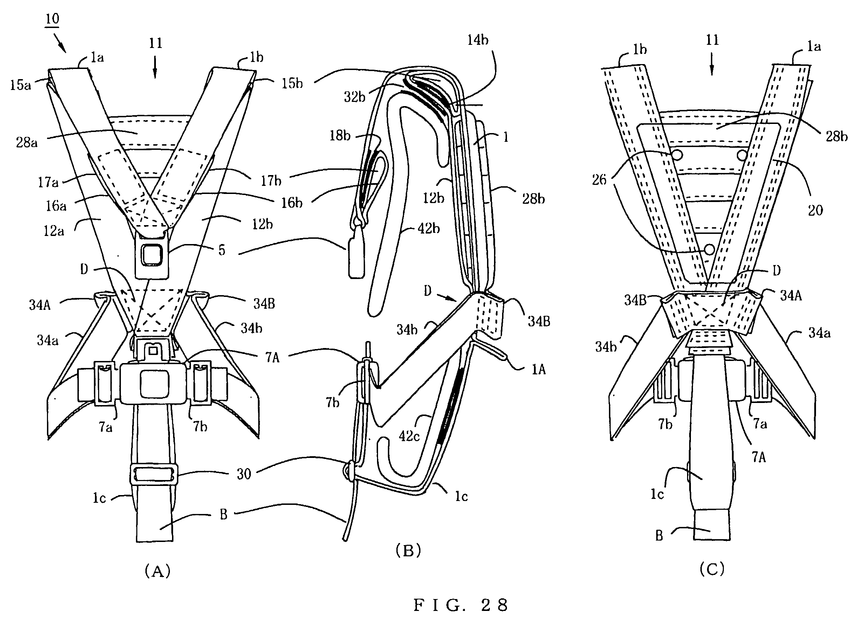

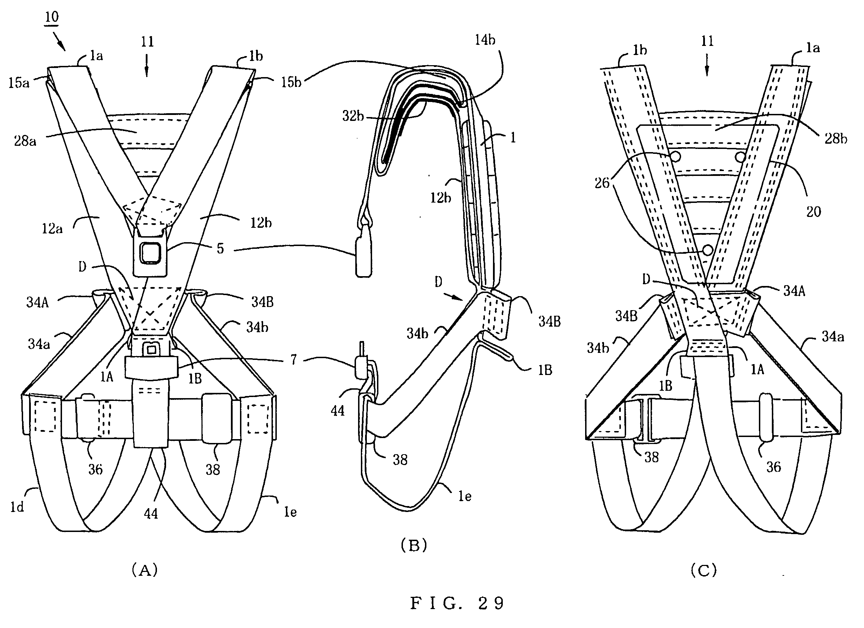

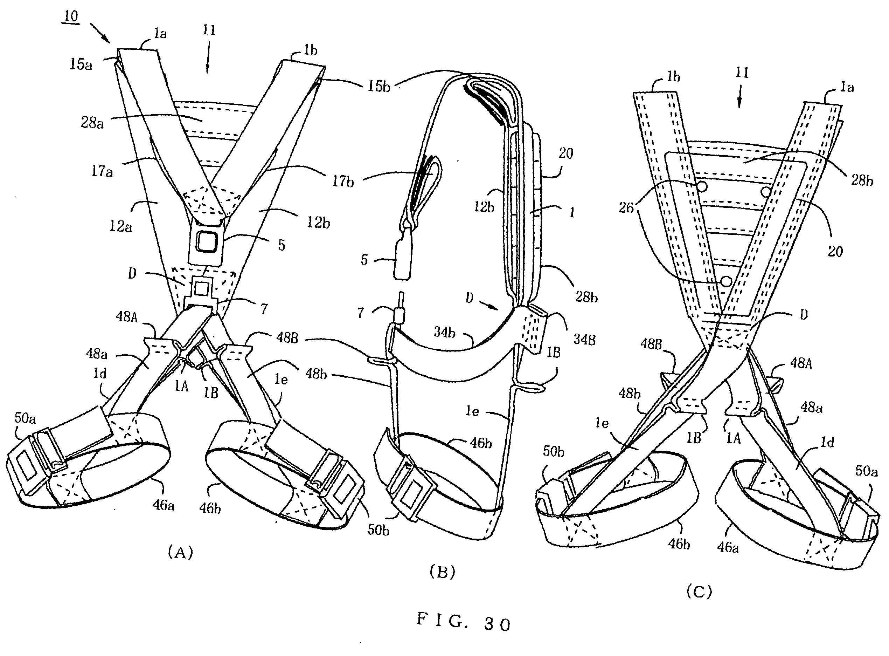

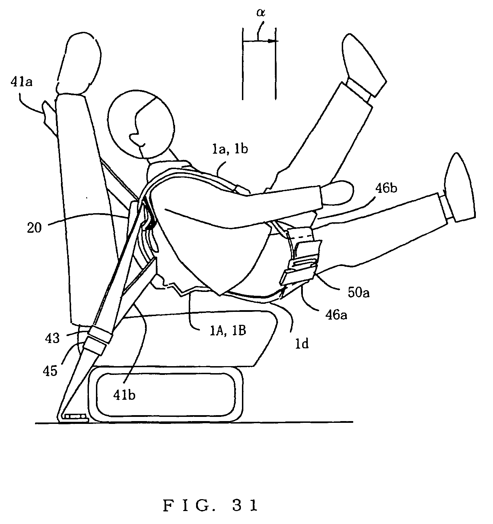

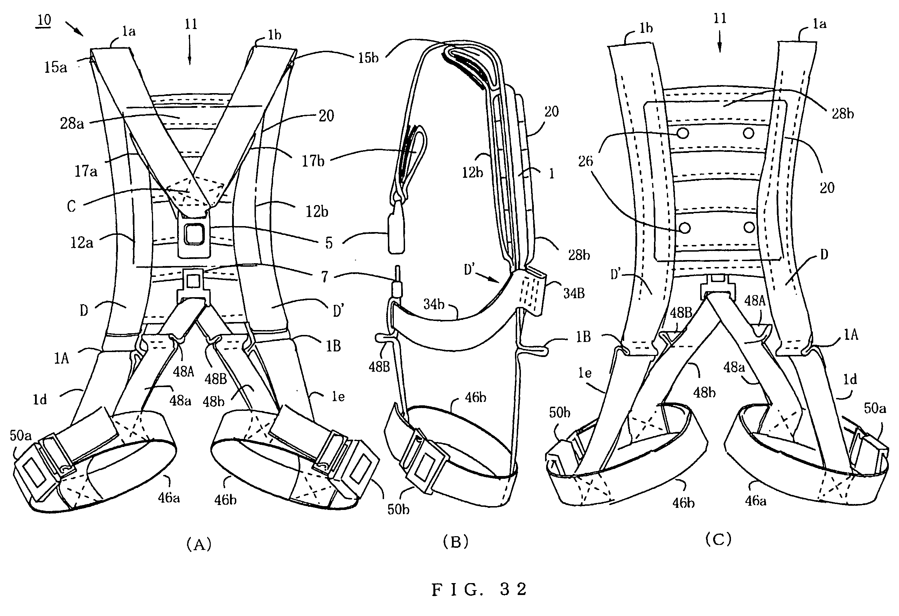

Fig. 1 is a diagram useful in describing the principles of the present invention; Fig. 2 is an external view of an auxiliary seat belt according to a first embodiment; Fig. 3 is a diagram (1) useful in describing a method of manufacturing an auxiliary seat belt according to the first embodiment; Fig. 4 is a diagram (2) useful in describing a method of manufacturing an auxiliary seat belt according to the first embodiment; Fig. 5 is a diagram (3) useful in describing a method of manufacturing an auxiliary seat belt according to the first embodiment; Fig. 6 is a diagram (1) useful in describing a method of storing an auxiliary seat belt according to the first embodiment; Fig. 7 is a diagram (2) useful in describing a method of storing an auxiliary seat belt according to the first embodiment; Fig. 8 is a diagram illustrating the auxiliary seat belt according to the first embodiment when the seat belt is worn by a standing user; Fig. 9 is a diagram (1) illustrating the auxiliary seat belt according to the first embodiment when the seat belt is in use; Fig. 10 is a diagram (2) illustrating the auxiliary seat belt according to the first embodiment when the seat belt is in use; Fig. 11 is a diagram (3) illustrating the auxiliary seat belt according to the first embodiment when the seat belt is in use; Fig. 12 is a diagram (4) illustrating the auxiliary seat belt according to the first embodiment when the seat belt is in use; Fig. 13 is a diagram useful in describing an auxiliary seat belt according to a second embodiment; Fig. 14 is a diagram useful in describing an auxiliary seat belt according to a third embodiment; Fig. 15 is a diagram useful in describing an auxiliary seat belt according to a fourth embodiment; Fig. 16 is an external view of an auxiliary seat belt according to a fifth embodiment; Fig. 17 is a diagram (1) useful in describing a method of manufacturing an auxiliary seat belt according to the fifth embodiment; Fig. 18 is a diagram (2) useful in describing a method of manufacturing an auxiliary seat belt according to the fifth embodiment; Fig. 19 is a diagram (3) useful in describing a method of manufacturing an auxiliary seat belt according to the fifth embodiment; Fig. 20 is a diagram (4) useful in describing a method of manufacturing an auxiliary seat belt according to the fifth embodiment; Fig. 21 is a diagram (5) useful in describing a method of manufacturing an auxiliary seat belt according to the fifth embodiment; Fig. 22 is a diagram (6) useful in describing a method of manufacturing an auxiliary seat belt according to the fifth embodiment; Fig. 23 is a diagram (7) useful in describing a method of manufacturing an auxiliary seat belt according to the fifth embodiment; Fig. 24 is a diagram showing three views of an auxiliary seat belt according to the fifth embodiment; Fig. 25 is a diagram useful in describing a shock absorbing pad in the fifth embodiment; Fig. 26 is a diagram (1) illustrating the auxiliary seat belt according to the fifth embodiment when the seat belt in use; Fig. 27 is a diagram (2) illustrating the auxiliary seat belt according to the fifth embodiment when the seat belt in use; Fig. 28 is a diagram useful in describing an auxiliary seat belt according to a sixth embodiment; Fig. 29 is a diagram useful in describing an auxiliary seat belt according to a seventh embodiment; Fig. 30 is a diagram useful in describing an auxiliary seat belt according to an eighth embodiment; Fig. 31 is a diagram illustrating the auxiliary seat belt according to the eighth embodiment when the seat belt in operation; Fig. 32 is a diagram useful in describing an auxiliary seat belt according to a ninth embodiment; and Fig. 33 is a diagram useful in describing the prior art.

### Best Mode for Carrying Out the Invention

A plurality of embodiments ideal for the present invention will be described in detail in accordance with the accompanying drawings. It should be noted that identical reference characters indicate identical or corresponding components throughout the drawings.

Fig. 2 is an external view of an auxiliary seat belt according to a first embodiment. Fig. 2(A) is a front view, Fig. 2(B) a right-side view and Fig. 2(C) a back view. In Fig. 2(A), the front side of a main body 10 corresponds to the torso (abdomen or chest), the back side corresponds to the back and the portion between these is provided with an opening 11 through which the head of the user (child, etc.) is passed. The surface of the main body 10 is covered with an air-permeable and nonflammable fabric (cotton, etc.) and the entirety of the main body is sewn in the manner of an article of clothing (vest, etc.). Accordingly, the user does not feel unconformable when the main body is worn over ordinary clothing. A female-type connecting member (buckle, etc.) 5 is attached to the lower side of the abdomen portion utilizing a folded part of webbing (referred to simply as a "belt" below) 1. A male-type connecting member 7 is attached, in such a manner that the effective length of the belt 1 can be adjusted, to the end of the belt 1 which extends downward from the back portion of the back side and develops into the abdomen portion via the crotch of the user. When the main body 10 is put on over the head and the male connecting member 7 is extracted from the crotch and connected to the female connecting member 5, the process of putting on the auxiliary seat belt is completed. Furthermore, when the auxiliary seat belt is used, it will suffice for an already existing seat belt 41 to be passed between the back of the user and the back portion of the main body and for a male connecting member 43 at the end thereof to be connected to a receptacle (buckle) for the seat belt 41, though this is not illustrated.

In Fig. 2(B), it is preferred that the back and abdomen portions of the main body 10 be provided with through-holes 15, 17 through which the already existing seat belt 41 is passed to hold the auxiliary seat belt on the seat. By passing the already existing seat belt 41 through the through-holes 15/17, the auxiliary seat belt can be restrained in a fixed attitude at all times.

In Fig. 2(C), the back side of the back portion is provided with a pocket 19. As will be described later, small articles may be placed in the pocket or the folded main body 10 can be stored in the pocket 19 when the auxiliary seat belt is carried about when not in use.

Figs. 3 to 5 are diagrams (1) - (3) useful in describing a methods of manufacturing the auxiliary seat belt according to the first embodiment. Fig. 3 relates to a method of manufacturing the skeletal structure of the auxiliary seat belt. In Fig. 3(A), a belt 1 of long length is prepared (the belt may be equivalent to the already existing seat belt webbing or may correspond to such webbing). Let A, B represent the two ends of the belt 1 and let C, D represent intermediate portions. In Fig. 3(B), the end A of belt 1 is caused to curve to forward and then is folded at point C. At this time the end A of belt 1 is passed through an attaching opening 5a in the female connecting member 5 and is folded, as shown in Fig. 3(C), whereby enough tensile strength for supporting the female connecting member 5 is obtained at the folded portion C. Since it is unnecessary to sew this portion in order to attach the female connecting member 5, manufacture is easy. However, sewing may be performed if desired. With reference again to Fig. 3(B), the end A folded at point C is curved toward the rear and is joined (as by sewing) to the belt at point D. On the other hand, the end B of belt 1 is curved forward and, as shown in Fig. 3(D), the end B is passed (wound) through an attaching opening 7a in the male connecting member 7 and attached in such a manner that the effective belt length on the side of end B can be adjusted. Instead of folding the single belt 1, an arrangement may be adopted in which another belt 3 of short length is sewn between points C and A. The skeletal structure of the auxiliary seat belt according to the first embodiment is thus completed and may serve as a completed article of one example of an auxiliary seat belt. According to the first embodiment, however, safety, reliability, storability (portability), etc., are improved by further providing various additional structural elements described later.

Fig. 4 illustrates a case where both ends C, B in Fig. 3(B) are spread apart vertically and viewed from the front side. Fig. 4(A) is a front view, Fig. 4(B) a right-side view and Fig. 4(C) a back view. In Fig. 4(A), shock absorbing members 9a - 9d comprising resilient synthetic rubber or sponge, etc., are secured (as by adhesive or sewing) to sides CD and CA of belt 1. Furthermore, covers 13a, 13b comprising premolded air-permeable, nonflammable fabric or synthetic fibers, etc., are used to cover the belt and shock absorbing members and the covers are sewn into a bag-like configuration overall. In Fig. 4(B), the through-holes (belt passing holes) 15, 17 through which the already existing seat belt 41 is passed to secure the auxiliary seat belt to the seat are provided at this time. In Fig. 4(C), the back portion of the auxiliary seat belt is provided with the pocket 19. This completes the auxiliary seat belt according to this embodiment.

Fig. 5 is a diagram illustrating a state in which the auxiliary seat belt of Fig. 4 is folded at both shoulders (the state prior to wearing). Fig. 5(A) is a front view, Fig. 5(B) a right-side view and Fig. 5(C) a back view. In Fig. 5(A), the shock absorbing member 9a is situated at the abdomen of the user, the shock absorbing members 9b, 9c are situated at both shoulders and at both sides of the chest respectively, and the shock absorbing member 9d is situated at the back portion of the user. Thus the upper half of the user is flexibly protected from impact caused by collision (pressure caused by the belt 1, etc.). In Fig. 5(B), the shock absorbing members 9a - 9d are provided on the inner side of the belt 1, thereby sufficiently mitigating the shock that acts upon the body of the user owing to pressure from the belt 1. The shock absorbing member 9a extends as far as the lower side of the portion at which the connecting members 5, 7 are connected, thereby sufficiently mitigating the shock that acts upon the abdomen owing to pressure from the connecting members 5, 7. Of course, it goes without saying that the shock absorbing members 9a - 9d protect the body of the user from collision with another object.

Figs. 6 and 7 are diagrams (1), (2) useful in describing a method of storing the auxiliary seat belt of the first embodiment. The auxiliary seat belt after being manufactured or used is folded up in the manner described below. In accordance with the first embodiment, the main body 10 can be accommodated in the pocket 19 compactly through a simple operation of folding the main body 10 twice, as a result of which the main body can placed in a brief case or the like and carried about with ease. Fig. 6 illustrates a state (a first state) in which the auxiliary seat belt in the state of Fig. 4(B) is folded in the vicinity of the back portion (at the lower side of the shock absorbing member 9d). Fig. 6(A) is a front view, Fig. 6(B) a right-side view and Fig. 6(C) a back view. In Fig. 6(B), the pocket 19 is turned inside-out in the manner illustrated when the auxiliary seat belt is folded in the vicinity of the back portion, whereby the pocket 19 becomes a reverse pocket 19' for accommodating the auxiliary seat belt. At this point in time, moreover, the shock absorbing member 9d, which extends to the back side of the user, and the major part of the portion that will extend to the waist (buttocks) of the user are already accommodated within the reverse pocket 19'.

Fig. 7 illustrates a state (a second state) in which the auxiliary seat belt in the state of Fig. 6(B) is folded further at both sides of the chest (shock absorbing members 9b, 9c). Fig. 7(A) is a front view, Fig. 7(B) a right-side view and Fig. 7(C) a back view. In Fig. 7B, the portions of the shock absorbing members 9b, 9c are inserted into the reverse pocket 19' while the auxiliary seat belt is folded in mutually opposing directions at both side edges of the shock absorbing members 9b, 9c. This is accompanied by the portion of the shock absorbing member 9a being accommodated in the reverse pocket 19'. If necessary, the protruding belt 1 and male and female connecting members 7, 5 are accommodated in the space within the reverse pocket 19'. Thus, the auxiliary seat belt is folded up compactly through the simple operation described above. The auxiliary seat belt can subsequently be accommodated in a brief case or the like and carried about with ease.

Fig. 8 is a diagram illustrating the auxiliary seat belt according to the first embodiment when the seat belt is worn by a standing user. Fig. 8(A) is a front view, Fig. 8(B) a right-side view and Fig. 8(C) a back view. In Fig. 8(A), the head of the user is passed through the opening 11 of the main body 10, the auxiliary seat belt is worn on both shoulders, the belt 1 on the back side is passed through the crotch and lifted up to the side of the abdomen, and the male and female connecting members 7, 5 are latched at the abdomen. In Fig. 8(B), the through-hole 15 is situated at the back side of the user and the through-hole 17 is situated at the abdomen of the user at this time. In Fig. 8(C), the pocket 19 is disposed at the back side of the user and small articles for a child or the like can be accommodated within the pocket. It is possible for the user to walk freely while the auxiliary seat belt is being worn. If the belt 1 in the crotch area becomes annoying when walking, the user can unlatch the male connecting member 7 and accommodate it in the pocket 19.

Figs. 9 to 12 are diagrams (1) - (4) useful in describing the auxiliary seat belt according to the first embodiment when the seat belt is in use. Fig. 9 is a diagram illustrating an example of use of the auxiliary seat belt on a front seat. Fig. 9(A) is a front view, Fig. 9(B) a left-side view and Fig. 9(C) a right-side view. In this example as shown in Fig. 9(A), the front-seat seat belt 41 which extends from above and below the side door is passed through the through-hole 15 of the auxiliary seat belt put on by the user, and the male connecting member 43 at the end of the belt is latched with the female connecting member 45 anchored to the floor at the side of the seat. It should be noted that auxiliary seat belt may be set on the seat in advance (i.e., the seat belt 41 may be passed through the through-hole 15 of the back in advance), and the user may put on the auxiliary seat belt when boarding the vehicle. In Figs. 9(B), (C), the auxiliary seat belt in this case is fastened to the front seat at the back of the user and the upper half of the user is restrained by the auxiliary seat belt. Accordingly, even if the automobile sustains a collision at the front, the auxiliary seat belt is fastened to the back side (the seat back) and, as a result, the upper half of the user's body also is restrained in a stable attitude on the seat back by the auxiliary seat belt. In other words, the upper half of the user's body will not fall forward. In this case the user (child) is directly restrained by the seat belt 41 and therefore is allowed to change his or her posture with comparative freedom.

Fig. 10 is a diagram illustrating another example of use of the auxiliary seat belt on a front seat. Fig. 10(A) is a front view, Fig. 10(B) a left-side view and Fig. 10(C) a right-side view. In this example as shown in Fig. 10(A), the front-seat seat belt 41 which extends from above and below the side door is passed through the through-hole 17 on the abdomen side of the auxiliary seat belt put on by the user, and the male connecting member 43 at the end of the belt is latched with the female connecting member 45 anchored to the floor at the side of the seat. In Figs. 10(B), (C), the auxiliary seat belt in this case is fastened to the side of the front seat on the abdomen side of the user and the entirety of the upper half of the user is doubly restrained by the auxiliary seat belt. Accordingly, even if the automobile sustains a collision at the front, the upper half of the user's body is doubly bound to the side of the front seat by the already existing seat belt 41 and auxiliary seat belt. As a result, there is no danger that a child or the like will slip out from the already existing seat belt 41 and therefore the child can be safely protected.

Fig. 11 is a diagram illustrating an example of use of the auxiliary seat belt on a back seat. Fig. 11(A) is a front view, Fig. 11(B) a left-side view and Fig. 11(C) a right-side view. In this example as shown in Fig. 11(A), the rear-seat seat belt 41 which extends from below the seat is passed through the through-hole 17 on the abdomen side of the auxiliary seat belt put on by the user, and the male connecting member 43 at the end of the belt is latched with the female connecting member 45 secured to the back seat. In Figs. 11(B), (C), the auxiliary seat belt in this case is fastened to the side of the back seat on the abdomen side of the user and the entirety of the upper half of the user is doubly restrained by the auxiliary seat belt. Accordingly, even if the automobile sustains a collision at the front, the upper half of the user's body is doubly and safely bound to the side of the back seat by the seat belt 41 and auxiliary seat belt.

Fig. 12 illustrates another example of use of the auxiliary seat belt on a front seat. Since a child or the like generally has a light body weight, there is the danger that the impact locking mechanism of the already existing seat belt will not operate appropriately and that the child will be thrown forward. Fig. 12(A) is a front view of a front seat. Here already existing seat belts 41a, 41b are secured so as not to shift relative to each other in a state in which the seat belts 41a, 41b are fully extended in advance. Furthermore, both seat belts 41a, 41b are mutually secured by an anchor fitting 47b even at the ends of the seat belt 41. By adjusting the effective length of the seat belt 41 at this time, the seat belt 41 will not extend any further. Accordingly, even a child with a light body weight can be safely protected in a manner similar to that of a locked state. The insert drawing (a) illustrates an example of the anchor fitting.

Figs. 12(B), (C) illustrate a method of fixing belts by the anchor fitting. First, one seat belt 41b is passed through in the manner shown in Fig. 12(B). If one more seat belt 41a is passed through as shown in Fig. 12(C), both seat belts 41a, 41b will be secured so as not to shift relative to each other. Preferably, two anchor fittings 47a, 47b are used to fix the belts at two locations. Though not illustrated, this arrangement can be similarly applied to the rear-seat seat belt 41 as well.

Fig. 13 illustrates an auxiliary seat belt according to a second embodiment. This illustrates a case where the back portion of the auxiliary seat belt of the kind shown in Fig. 2 is provided with a supplementary belt. Fig. 13(A) is a front view, Fig. 13(B) a right-side view and Fig. 13(C) a back view. In Fig. 13(A), a comparatively short supplementary belt 27 extends toward the main body 10 on the left side (or right side) of the back portion, and a male connecting member 31 (or female connecting member 29) is attached to the end of this belt. Further, a comparatively long supplementary belt 27 extends to the right side (or left side) of the back portion, and a female connecting member 29 (or male connecting member 31) is attached to the end of this belt in such a manner that the effective length of the belt can be adjusted. The reason for dividing the supplementary belt 27 into short and long lengths is that if this mode of attachment is adopted, then the user (or the neighboring driver) can readily attach and detach the male and female connecting members 31, 29 from the front side of the seat.

In this arrangement, it is possible to increase the degree of safety by using this arrangement in combination with the mode of use illustrated in Fig. 10. That is, though not shown, the male and female connecting members 31, 29 are connected in a state in which the long supplementary belt 27 is wound on the seat back (or head rest) of the front seat. If necessary, the belt end of the female connecting member 29 is pulled to adjust the effective length of the supplementary belt 27, and the latter is tightened firmly about the seat back (or head rest). The auxiliary seat belt in this case is bound to the side of the seat at both the abdomen portion and back portion. This enhances safety.

In Fig. 13(B), the supplementary belt 27 may be passed through the through-hole 15 of the back portion and sewn to the through-hole 15. Alternatively, the through-hole 15 at the back portion is not provided and the supplementary belt 27 may be sewn directly to the belt 1 so as to engage with the belt at the back portion. In Fig. 13(C), the supplementary belt 27 and the male and female connecting members 31, 29 can be accommodated in the pocket 19 when not in use. This assures that they will not become bothersome.

With reference again to Fig. 13(B), the insert diagram (a) illustrates a protective part for the crotch area. The protective part 35 is made by sewing internally a resilient shock absorbing member 37 such as a sponge. The protective part is set in the vicinity of the user's crotch by passing the belt 1 at the crotch through a through-hole 39. As a result, the crotch of the user can be protected in such a manner that shock caused by the belt 1 will not act directly upon the crotch. The protective manner 35 is a part that is freely inserted and withdrawn, and it can be stored in the pocket 19 when not in use.

Fig. 14 illustrates an auxiliary seat belt according to a third embodiment. This relates to a modification of the skeletal structure of the auxiliary seat belt. In Fig. 14(A), the skeletal portion of the auxiliary seat belt is such that the single belt 1 is folded back at a point C as illustrated and one end A (or one end B) thereof is turned over and secured at point D (as by sewing). In Fig. 14(B), if the folded portion C of the belt 1 is curved toward the front, both shoulder portions which embrace the opening 11 are formed. The folded portion C is provided with the female connecting member 5 when the belt 1 is folded, as shown in Fig. 14(C). On the other hand, the end B of the belt 1 is curved toward the front and the male connecting member 7 is connected to the end B, as shown in Fig. 14(D), in such a manner that the effective belt length on the side of end B can be adjusted. Furthermore, the back portion and/or abdomen portion of the auxiliary seat belt are provided with band-shaped belt passing members 21, 23 for allowing the already existing seat belt 41 to be passed therethrough.

Fig. 15 illustrates an auxiliary seat belt according to a fourth embodiment. This relates to another modification of the skeletal structure of the auxiliary seat belt. In Fig. 15(A), this skeletal portion of the auxiliary seat belt differs from that of Fig. 14 in that the single belt 1 is folded back at a point C as illustrated and the end A (or end B) thereof is secured (as by sewing) to belt 1 at point D in substantially parallel fashion without being turned over. In Fig. 15(B), a skeletal structure similar to that of the case shown in Fig. 14(B) is obtained in this case as well. Further, cylindrical belt passing members 21, 23 for passing the already existing seat belt 41 therethrough are attached to and bridge the back portion or abdomen portion of the auxiliary seat belt. This makes it easy for the already existing seat belt 41 to be passed through and reinforces the structure. Furthermore, in this example, a mesh-like fabric 25 comprising a nonflammable cloth or synthetic fibers is sewn to the back and abdomen portions of the auxiliary seat belt. Such an auxiliary seat belt is superior in terms of external appearance and air permeability.

Fig. 16 is an external view of an auxiliary seat belt according to a fifth embodiment. This auxiliary seat belt is such that the major portion of the belt 1 constituting the skeletal structure is exposed. Manufacture is facilitated owing to the functional beauty of the webbing and that minimal working (sewing) is required for manufacture. In addition, the external appearance as an auxiliary seat belt (child's seat belt) is maintained. An overview of this construction will be described below.

The belt 1 basically has a structure in which the belt 1 passes over a right (left in the drawing) shoulder portion 1a from the vicinity of the waist at the back of the main body, reverses direction in the vicinity of the abdomen portion at the front, passes over a left shoulder portion 1b, is joined (as by sewing) to itself in the vicinity of the waist at the back, passes through a crotch area 1c at the lower part of the main body and develops into the abdomen portion at the front. Male and female connecting members 7, 5 are detachably provided on the portion of the belt 1 that reverse direction at the abdomen and in the vicinity of the end that is passed through the crotch area and develops into the abdomen portion at the front. The connecting members 5, 7 are of the type in which insertion is by a single touch and disconnection by a single push. Connection (locking) is achieved by pushing the male connecting member 7 into the female connecting member 5. When a button on the female connecting member 5 is pushed, an internal lock is released and the male connecting member 7 is thrust out strongly by the effect of an internal spring.

Waist belts 34a, 34b which extend to the left and right from the vicinity of the waist at the back of the main body for the purpose of restraining the periphery of the user's abdomen waist (abdomen) are provided. It is so arranged that the effective length of this waist belt 34 can be adjusted.

Provided on the inner side of the shoulder belts 1a, 1b are belt passing holes (through-holes) 15a, 15b through which the seat belt 41a, which extends from the upper side of the vehicle, is passed to stably bind the auxiliary seat belt to the seat side. Preferably, the belt passing hole 15a is used so as to stably grasp a portion of the seat belt 41a that extends from the upper right (left in the drawing) of the vehicle, and the belt passing hole 15b is used so as to stably grasp a portion of the seat belt 41a that extends from the upper left (right in the drawing) of the vehicle.

A flexible, comparatively strong plate-shaped resilient member (structure) 20 is embedded in the back portion of the main body 10. The resilient member 20, together with the belts 1a - 1c, constitutes the skeletal structure of the auxiliary seat belt. Specifically, when the auxiliary seat belt is used, the already existing seat belts 41a, 41b engage, at a fixed attitude, the belt 1 (i.e., belts 1a - 1c) that embrace the resilient member 20 between them and develop into the back side. Accordingly, first the already existing seat belts 41a, 41b primarily restrain the resilient member 20 and the belts 1a - 1c that develop into the back side secondarily restrain the body of the user at three points, namely at both shoulders and in the crotch area. As a result, the resilient member 20 normally seats the user in a safe, comparatively free, forward-facing attitude. In the event of a collision with an automobile or the like, the resilient member 20 maintains this safe attitude, without allowing the body of the user to roll over. At this time, moreover, the resilient member 20 curves and bends, as a result of which the impact (acceleration) that acts upon the body of the user can be mitigated (absorbed) rapidly.

Furthermore, a fused belt portion 1A is provided in the vicinity of the base of the crotch belt 1c, and waist belts 34a, 34b are provided with fused belt portions 34A, 34B, respectively, at positions having left-right symmetry in the vicinity of the base. The fused belt portions 1A, 34A, 34B rapidly mitigate (absorb) impact (acceleration) applied to the user's body because when the body (waist) of the user is thrown forward by collision with a vehicle, the sewing threads of each fused belt portion are cut (break). The details of this auxiliary seat belt will become clearer from the description that follows.

Figs. 17 - 23 are diagrams (1) - (7) useful in describing a method of manufacturing the auxiliary seat belt according to the fifth embodiment. Fig. 17 illustrates a method of manufacturing the skeletal structure of belt 1. In the description that follows, an example in which the invention is applied to a child of age three years (body weight of 15 kg). In Fig. 17(A), first belt 1 of long length is prepared. An example of dimensions (in millimeters) is set forth in the drawing. The webbing of belt 1 is equivalent or corresponds to that of the already existing seat belt webbing. Let A, B represent both ends of the belt 1, and C, D, D' represent the intermediate portions. The portions of belt 1 divided at these points will be referred to as crotch belt 1c, both shoulder belts 1a, 1b, and a grasping belt 12b for grasping the already existing seat belt 41. Furthermore, in addition to the grasping belt 12b, a separate grasping belt 12a is prepared. In Fig. 17(B), the belt 1 is folded at point C to form both shoulder belts 1a, 1b, the crotch belt 1c and the grasping belt 12b. In Fig. 17(C), the belt 1 is passed through a belt attaching opening of the female connecting member 5 and is folded at point C. Further, the grasping belt 12b is folded in the direction of shoulder belt 1b and is worked to form the belt passing hole 15b for passing the already existing seat belt 41 therethrough. One end of the grasping belt 12a is joined (sewn, etc.) to the joining portion (point D, D') of belt 1, and the other end is worked to form the belt passing hole 15a. Further, the vicinity of the base of crotch belt 1c is provided with the fused belt portion 1A for mitigating forward-directed acceleration that acts upon the user at the time of a vehicular collision. Furthermore, the end of the crotch belt 1c is passed (wound) through the attaching opening of the male connecting member 7 and is so adapted that the effective length of the crotch belt 1c can be adjusted.

Fig. 18 illustrates a method of manufacturing the belt passing hole 15b (and, similarly, the hole 15a) for grasping the already existing seat belt 41a. An example of dimensions (in millimeters) is set forth. The belt 1 is folded at point D' to obtain the grasping belt 12b. The grasping belt 12b extends along the shoulder belt 1b to the vicinity of the front side (chest portion) of the shoulder without being sewn. Here the belt 12b is folded at the side of the shoulder belt 1b and extends along the shoulder belt 1b to the upper side of the back portion of the main body (the upper end of the resilient member 20). Furthermore, the grasping belt 12b is folded on the inner side of the annular portion and the end thereof develops into the folded portion in the vicinity of the chest of the grasping belt 12b. Thus, the belt passing hole (annular portion) 15b for grasping the already existing seat belt 41 is formed. Furthermore, the upper half of the annular portion 15b is sewn to the shoulder belt 1b, and the lower half is left free. The outer-side surface of the lower half and the inner surface of the grasping belt 12b that opposes the outer-side surface have magic tapes (trademark name) 14b sewn thereto. It should be noted that the magic tapes 14b are cloth tapes that are freely attached and detached by engaging two tapes, one of which has hooks and the other or which has piles. Furthermore, one magic tape 32b for freely allowing a shock absorbing pad 42 (described later) to be freely attached and detached is sewn, over the indicated range, to the outer-side surface of the below of the lowermost layer in the grasping belt 12b thus wound into three layers.

When the auxiliary seat belt is not in use, the pair of magic tapes 14b are contacted with each other, whereby the grasping belt 12b is held in the same fashion as the shoulder belt 1b and does not become an annoyance. When the auxiliary seat belt is used, first the mid-portion of the grasping belt 12b is grasped and pulled downward by hand to detach the magic tapes 14b, whereby the lower half of the grasping belt 12b is freed. Thus a space with a large opening is formed between the grasping belt and shoulder belt 1b by a single-touch operation. The two seat belts 41a, 41b which extend vertically on the left side (front side in the drawing) of the vehicle are passed through this space, and the seat belt 41a on the upper side is situated on the back side of the belt passing hole 15b (preferably, this seat belt is situated within a range of about 50 mm rearward of a shoulder center line CL), in which state the magic tapes are contacted and joined. As a result, the seat belt 41a on the upper side is grasped stably by the belt passing hole 15b. On the other hand, the seat belt 41b on the lower side is set at a natural position in the vertical direction (within a range in which the point D' is not exceeded) in the space between the shoulder belt 1b (resilient member 20) and grasping belt 12b. Though not illustrated, it is preferred that the already existing seat belts 41a, 41b be passed also between the shoulder belt 1a and grasping belt 12a on the opposite side (not through the belt passing hole 15a).

Thus, by a simple operation, the already existing seat belt 41 can be set reliably at the back portion and at the shoulder portion of the auxiliary seat belt. With such a restraining configuration, a strong force in the direction of arrow a will act upon the grasping portion of the seat belt 41a on the upper side in the event of a vehicular collision. However, the pair of magic tapes 14b are provided over a comparatively long length (e.g., 150 mm in front of the center line CL to 50 mm in back of the center line) so that they will not readily become detached even in this case. The operation for releasing the seat belt 41 is the reverse of the foregoing. Release can be performed with ease in a similar manner.

Fig 19(A) illustrates a method of manufacturing the fused portion 1A provided on the crotch belt 1c. If the crotch belt 1c is folded in the vicinity of point D of belt 1 in a direction that makes a center. line CL2 parallel to a center line CL1 along the back portion of the main body, an overlap area (indicated by the dashed lines in the drawing) P of opposing surfaces is produced at the folded portion. The portion of the overlap area P is sewn in multiple stages in a direction perpendicular to the center line CL2 using, e.g., polyester thread (of No. 8 thickness, etc.). The crotch belt 1c after sewing is folded toward the side of arrow a again about the uppermost sewn line to thereby attain the state of use. Thus, by sewing the crotch belt 1c in a direction perpendicular to the center line CL2 of the folded portion, the break resistance of each sewn line is maximized with respect to the tension that acts upon the crotch belt 1c when the auxiliary seat belt is used. By sewing lines in a plurality of stages, violent acceleration that acts upon the user can be mitigated (absorbed) in stages by the breaking of each sewn line. Depending upon conditions of the sewing machine, it is permissible to perform sewing in a direction that is parallel to the center line CL2.

Actual sewing does not exceed a range of 60 mm, for example, in the longitudinal direction of the drawing. If this arrangement is adopted, the elongation of the crotch belt 1c is less than 60 mm even if the fused portion 1A becomes detached. As a result, the body of the user can be restrained within safe limits. Further, the lowermost sewn line in the drawing preferably is separated by, e.g., 10 mm or more from the folded end portion of crotch belt 1c. If the separation is less than this, the sewn line at this portion may not break completely and the function of the fused belt portion may not be realized fully.

It should be noted that the fused belt 1A may be joined by various methods other than sewing that allow detachment under suitable tension (riveting, stapling, adhesion or a combination of these). The fused belt portion 1A may be provided in two layers within limits allowed by extension of the crotch belt 1c. Such a fused belt portion may be provided on both shoulder portions 1a, 1b if necessary.

Fig. 19(B) illustrates a method of dealing with the end portion of the crotch belt 1c. After being passed through an anchor member 30, the crotch belt 1c is folded around a mounting bar inside the male connecting member 7 and then is wound around the anchor member 30 again, folded back on itself and sewn. The effective length of the crotch belt 1c can be adjusted by changing the length of the overlapping portion of the crotch belt 1c. A waist belt 34 described later is passed into the interior of a ring formed by the overlapping portion to thereby hold the waist belt 34 at the correct position.

Fig. 20 illustrates a method of manufacturing the waist belt 34. Fig. 20(A) is a plan view of webbing 34. An example of dimensions (in millimeters) is set forth in the drawing. Reference characters 34A, 34B represent locations at which fused belt portions are formed. Fig. 20(B) is a perspective view of the back side of the waist belt 34. The belt webbing 34 is arranged into a ring shape overall and the vicinity of the central portion of the back side thereof is provided with the two fused belt portions 34A, 34B at positions having left-right symmetry. The lengths of folded-over portions of the fused belt portions 34A, 34B are, e.g., 25 mm. Accordingly, the total extension length when both of the fused belt portions 34A, 34B break is less than 50 mm. This is enough length to restrain the user's body within the limits of safety. It should be noted that the portion of the waist belt 34 that extends to the left in the drawing is referred to as waist belt 34b and that the portion that extends to the right in the drawing is referred to as waist belt 34a. The end of the waist belt 34b is wound around one mounting portion of a buckle 38, is folded back on itself and is sewn. The end of the waist belt 34a is passed through an anchor member 36 and then is folded back at the other mounting portion of the buckle 38, is wound around the anchor member 36 again and is sewn to its own folded-back portion. As a result, the effective length of the waist belt 34 is adjustable. Fig. 20(C) is a front view from the buckle 38 of waist belt 34 to the anchor member 36.

Fig. 21 illustrates a method of manufacturing the resilient member 20. An example of dimensions (in millimeters) is set forth in the drawing. Fig. 20(A) is a front view and Fig. 20(B) a partial sectional view. The resilient member (structure) 20 has a structure in which an intermediate plate-shaped member 24 having comparative rigidity and strong resilience (strong bending stress) with respect to bending is sandwiched front and back by plate-shaped members 22a, 22b of comparative flexibility (members which will not crack and which are nonflammable). These members are pressed together and fixed by three rivets 26. The thickness of each plate-shaped members 22a, 24, 22b is 2 mm by way of example. The overall thickness is 6 mm. The intermediate plate-shaped member 24 consists of plastic such as ABS resin or the like. ABS resin comprises a copolymer of A (acrylonitrile), B (butadiene) and S (styrene). This is a typical engineering plastic that combines the chemical resistance and heat resistance of A, the impact resistance of B and the formability of S. If necessary, various fillers (glass fiber, nylon, etc.) or additives are added so that the desired property (impact resistance, tensile strength, rigidity, bending stress, etc.) can be enhanced. The plate-shaped members 22a, 22b front and back consist of plastic such as polypropylene resin. These members are comparatively flexible, will not readily crack and exhibit excellent nonflammability. As a result, the entire resilient member 20 will not readily crack and is nonflammable. By riveting the three plate-shaped members together, each of the plate-shaped members 22a, 24, 22b can exhibit is own characteristics (resilience, etc.) to the maximum extent. Further, even if the intermediate plate-shaped member 24 should happen to crack owing to a strong impact, the plate-shaped members 22a, 22b do not readily crack and therefore the user can be protected from dangerous fragments. It should be noted that the properties, number, size (planar shape and thickness, etc.) of the plate-shaped members and the combination of these can be selected in various ways. It is possible for the intermediate plate-shaped member 24 to have a multilayer structure consisting of a plurality of plate-shaped members having various degrees of resilience. This makes it possible to obtain other desired impact mitigating (absorbing) characteristics. Further, various other joining means can be employed instead of the rivets 26.

Fig. 22(A) illustrates an example of sewing patterns of the fused belt portion 1A. If we assume that the overall length of the folded portion of crotch belt 1c is 60 mm, four sewing lines will be provided at equal spacing on the portion remaining after a length L (e.g., 10 mm) from the lower end of the folded portion is omitted. A strong polyester thread or the like is used as the sewing thread and the thickness thereof is, e.g., No. 6. The example of a sewing pattern can be achieved by a single sewing operation using an automatic sewing machine. The number of sewing-line stages and the spacing can be selected in various other ways. In addition, the spacing between the sewing lines is not limited to equidistant spacing.

Fig. 22(B) illustrates one example of a sewing pattern of fused belt portion 34A/34B. If we assume that the overall length of each folded portion of waist belt 34 is 25 mm, four sewing lines will be provided at equal spacing on the portion remaining after a length L (e.g., 10 mm) from the lower end of the folded portion is omitted. For example, a polyester thread of No. 6 thickness is used as the sewing thread. The number of sewing threads, spacing and machine pitch, etc., can be selected in various other ways, and the spacing between the sewing lines is not limited to equidistant spacing.

Fig. 23(A) illustrates the sewing pattern of the portion of the belt attached to a buckle or anchor. For example, at the end of the folded, overlapped portion of the waist belt 34, sewing is performed over substantially the entire width of the belt in such a manner that this portion will not peel off. On the other hand, on the side near the buckle 38, the internal belt attachment fitting is small in this example. Accordingly, taking into consideration the fact that the width of the belt wound on this portion will be reduced, a width smaller than the width of the original belt 34 is sewn firmly in multiple stages at this portion. Further, polyester of No. 6 thickness, for example, is used as the sewing thread.

Fig. 23(B) illustrates an example of sewing pattern at points D, D' on belt 1. A plurality of belts are overlapped at this portion. Specifically, the shoulder belt 1b extends to the side of the crotch belt 1c at the back of the drawing. A portion of the shoulder belt 1a is superimposed on this area. The shoulder belt 1a is folded at point D to form the grasping belt 12b and extends upward to the right. Furthermore, one more grasping belt 12a is superimposed in the same direction as that of the shoulder belt 1a but this is not shown in the drawings. The waist belt 34 is further superimposed on the intersection of these belts.

Various ways of overlapping the waist belt 34 are conceivable. One is a method of overlapping the belt at the most forward portion in the drawing. In this case, however, the weight that acts upon the user's waist is supported only at the sewn locations and therefore the overlapped portion tends to pull apart. One other is a method in which the belt is overlapped at the most rearward portion in the drawing. In this case, however, there is the danger that the waist belt 34 will pull apart if force acts upon the waist belt 34 in an abnormal direction (e.g., vertically in the drawing). Accordingly, it is preferred that the waist belt 34 be overlapped at the intermediate portion of another belt. The drawing illustrates a state in which the waist belt 34 is embraced in the folded-over portion from the shoulder belt 1a to the grasping belt 12b. However, the waist belt 34 may be embraced between the shoulder portion 1b and shoulder belt 1a. In either case, the sewing of this portion is performed by intersecting belts crosswise, whereby a high sewing strength is obtained. This also has the effect of preventing longitudinal tearing of the belt fabric. In the illustrated example, sewing is performed in zigzag fashion vertically and horizontally. Further, polyester thread of No. 6 thickness is used as the sewing thread. It should be noted that polyester thread of No. 8 thickness, for example, can be used at ordinary sewn portions other than the portion mentioned above.

Fig. 24 is a diagram showing three views of an auxiliary seat belt according to the fifth embodiment, in which Fig. 24(A) is a front view, Fig. 24(B) a right-side view and Fig. 24(C) a back view. Components already described above are designated by like reference characters and a description thereof is deleted. Here the insert drawing (a) is a sectional view of the resilient member (structure) 20. As shown in Figs. 24(B), (C), the resilient member 20 is supported at its back side by both shoulder belts 1a, 1b and is covered at its periphery by strong covers 28a, 28b in such a manner that the belts 1a, 1b will not come off the resilient member 20. The covers 28a, 28b of this example are constructed by spanning the belts 1a, 1b with belt segments of webbing that is the same as that of belt 1 (or winding these segments between the belts) and sewing these segments of the shoulder belts 1a, 1b at the left and right sides of the resilient member 20.

Furthermore, in Fig. 24(B), a shock absorbing pad 42 which extends from the vicinity of the connection between the connecting members 5, 7 of the auxiliary seat belt, passes over both shoulders 1a, 1b, passes by the common back portion and develops into the crotch area is provided so as to be readily attached and detached by magic tapes 32a, 32b provided on the lower side of both grasping belts 12a, 12b. The shock absorbing pad 42 is provided for the purpose of sufficiently mitigating strong shock that acts upon both shoulders, the chest, abdomen and crotch of the user owing to the shoulder belts 1a, 1b, connecting members 5, 7 and crotch belt 1c, and for the purpose of protecting the user's body from injury and burns caused by friction between the body and the belts. Instead of adopting an arrangement in which the shock absorbing pad 42 is freely attached and detached, the shock absorbing pad 42 may be permanently provided on the auxiliary seat belt in advance.

Fig. 25 is a diagram useful in describing the shock absorbing pad according to the fifth embodiment, in which Fig. 25(A) is a front view and Fig. 25(B) a side view. An example of dimensions (in millimeters) is set forth in the drawing. The entirety of the shock absorbing pad 42 comprises a union of simple parts. Reference characters 42a, 42b denote shoulder-pad parts passed over both shoulder portions 1a, 1b from the back portion of the main body for protecting the chest at the front; 42c a crotch-pad part for protecting the crotch; and 42d an abdomen-pad part for protecting the abdomen at the front (the portion at which the connecting members 5, 7 are joined). The interior of these parts is a resilient member such as rubber or sponge, the periphery thereof is covered by nonflammable fabric or the like and the exterior is subjected to a piping treatment. The parts are sewn together at the portions where piping has been performed, thereby joining the parts. Further, magic tapes (male side) 32a, 32b are sewn onto the undersides of the shoulder-pad parts 42a, 42b, whereby these may be freely attached to and detached from the grasping belts 12a, 12b.

Figs. 26, 27 are diagrams (1), (2) useful in describing the auxiliary seat belt according to the fifth embodiment when the seat belt in use. Fig. 26 illustrates state of use under normal conditions. In Fig. 26(A), the user (child) wears the auxiliary seat belt on his body and sits down in the front seat on the left side of an automobile. At this time the seat belt 41a on the upper side of the vehicle is passed through the belt passing hole 15b at the back portion of the main body, the seat belt 41b on the lower side is passed by the inner side of the grasping belt 12b and passed by the back portion in the vicinity of the waist, and the connecting member 43 at the end is latched with the connecting member 45 that extends up from the floor of the vehicle. Preferably, the seat belts 41a, 41b are passed by the inner side of the grasping belt 12a as well at this time.

Fig. 26(B) illustrates the positional relationship between the resilient member 20 and the belts 1a - 1c, 12b, 41a and 41b. The seat belt 41a on the upper side is held by the belt passing hole 15b so that the belt crosses the upper half of the resilient member 20 diagonally. The seat belt 41b on the lower side is situated on the inner side of the grasping belt 12b, whereby this belt crosses the lower half of the resilient member 20 horizontally. Though not shown, the grasping belt 12a extends toward the upper side of the seat belts 41a, 41b in a manner similar to that of the grasping belt 12b. On the other hand, the belts 1a - 1c support the back side of the resilient member 20 in a forward-facing direction, and the belts 1a - 1c restrain the body of the user in a safe, forward-facing posture. Under such restraint, the child can change his posture with a certain degree of freedom. Even if posture is changed, a safely restrained posture is stably maintained.

Fig. 27 illustrates the operation of the auxiliary seat belt at the time of a vehicular collision. In Fig. 27(A), the user (child, etc.) is thrown forward violently owing to its own inertia when the vehicle crashes owing to a collision or the like. In a case where the user is in the usual attitude leaning against the back of the seat somewhat, as shown in Fig. 26(A), the user often is thrown forward from the waist at the time of a collision, though this depends upon the posture of the user when the collision occurs. In any case, as a result the entire body of the user being thrown forward, a strong forward-directed force acts upon both shoulder belts 1a, 1b and upon the crotch belt 1c, as shown in Fig. 27(B). On the other hand, the resilient member 20 at this time is bound to the seat side momentarily by the locking action of the seat belt 41. As a result, the resilient member 20 bends greatly in three directions as indicated and the acceleration that acts upon both shoulders (i.e., the head) and upon the waist (in the vicinity of the center of gravity) of the user first is mitigated (absorbed) rapidly owing to the bending stress of the resilient member 20.

Furthermore, when impact is strong, the user is thrown forward to a greater extent while being held in a somewhat backward reclining attitude by the restraining action of both shoulder portions 1a, 1b. At this time the weight (center of gravity) of the user concentrates at the crotch belt 1c and waist belt 34, whereby the fused belt portions 1A, 34A, 34B in the vicinity of waist portion of the main body are pulled apart at one time in the manner shown in Fig. 27(A). This also rapidly mitigates (absorbs) acceleration acting upon the body of the user. In this backward reclining attitude, whiplash force of the kind that acts upon the user's neck in the lateral direction is mitigated. Thus, the body of the user finally is held fast by the auxiliary seat belt. The amount of movement of the user's body (center of gravity) is suppressed to within 10 mm, for example, forwardly of the position that prevailed prior to the impact. As a result, the body of the user is prevented from striking the dashboard, etc., at the front of the vehicle.

Fig. 28 is a diagram useful in describing an auxiliary seat belt according to a sixth embodiment. This illustrates a case where the waist belts 34a, 34b are freely attachable to an detachable from respective buckle members. Fig. 28(A) is a front view, Fig. 28(B) a right-side view and Fig. 28(C) a back view. The basic structure of this auxiliary seat belt may be the same as that described in conjunction with Fig. 16 (Fig. 24) above. However, the method of dealing with the waist belt 34 is different. Specifically, in Fig. 28(A), waist belts 34a, 34b of this example are provided at their ends with male connecting members 7a, 7b, respectively. The waist belts 34a, 34b are adapted in such a manner that the effective lengths thereof can be adjusted. In this example, on the other hand, a male connecting member 7A is provided on the end of the crotch belt 1c. The male connecting member 7A is freely attachable to and detachable from the female connecting member 5 similar to that of Fig. 16 and is capable of detachably accommodating the male connecting members 7a, 7b of the waist belts 34a, 34b. When this auxiliary seat belt is put on, first the main body 10 is placed over the head and set on the torso. Next, the crotch belt 1c is pulled up from the crotch area and the male connecting member 7A at the end of this belt is latched in the female connecting member 5. The male connecting members 7a, 7b of the left and right waist belts 34a, 34b are latched in the female connecting portions of the male connecting member 7A. The operation for taking off the auxiliary seat belt is the reverse of the above. Such an operation can be performed by the child himself and therefore the auxiliary seat belt is easy to handle. Furthermore, the female connecting member 5 may be of the three-point accommodating type and the crotch belt 1c and waist belts 34a, 34b may be accommodated in this member in a freely attachable and detachable manner.

Several other modifications will now be illustrated. Specifically, in Fig. 28B, the inner side of the abdomen portion of main body 10 is provided with belt passing holes (through-holes) 17a, 17b through which the already existing seat belt 41a is passed to secure the auxiliary seat belt to the seat side stably together with the user's body (chest portion, etc.). The belt passing hole 17b preferably is constituted by belt webbing 16b identical with that of belt 1. The belt webbing 16b is joined (as by riveting, sewing, etc.) at its lower end to the vicinity of point C (folded-over portion) of shoulder belt 1b. The upper end of belt webbing 16b is folded over on the side of the shoulder belt 1b in the manner illustrated, whereby an annular space is formed on the inner side thereof. This end is left free. A pair of magic tapes 18b are sewn, etc., onto half the surface on the outer side of belt webbing 16b and onto the inner surface of shoulder belt 1b that opposes this half surface on the outer side of the belt webbing. A similar arrangement is adopted for the belt passing hole 17a.

This arrangement is such that when the seat belt 41a that extends from the upper left (upper right in the drawing) of the vehicle is passed through the belt passing hole 17a, a comparatively large opening is formed between the shoulder belt 1a and the belt webbing 16a if the magic tapes 18b are pulled apart. The seat belt 41a is placed inside this opening and then the magic tapes 18a are brought into contact under these conditions. The seat belt 41a in this case extends from the shoulder of the user (child) and across the chest to restrain the user to the seat in a manner similar to that of ordinary use in the case of an adult. At this time the seat belt 41a is grasped stably in the belt passing hole 17a and therefore the child, etc. is placed in a safe, protective attitude even if the child moves. Meanwhile, the seat belt 41b that extends from the lower side of the seat passes over the waist and abdomen of the user and secures the user to the seat in a manner similar to that of ordinary use. The operation for releasing the seat belt 41a is the reverse of the foregoing and the seat belt is released easily in the same manner. This holds true also for the belt passing hole 17b. Thus, the auxiliary seat belt according to the sixth embodiment makes it possible to pass the already existing seat belt 41 over the back side and over the abdomen side as well. As a result, the auxiliary seat belt can deal flexibly with the preferences of the child and with differences in age. Such an auxiliary seat belt is easy to use.

The belt passing holes 15a, 15b of this example are formed to have somewhat small openings as a result of providing the belt passing holes 17a, 17b. Further, in Fig. 28(B), the shock absorbing pad 42 is divided into the two shoulder pads 42a, 42b and one crotch pad 42c that are capable of being attached separately.

Fig. 29 is a diagram useful in describing an auxiliary seat belt according to a seventh embodiment. This illustrates a case where the auxiliary seat belt is equipped with two crotch belts 1d, 1e. Fig. 29(A) is a front view, Fig. 29(B) a right-side view and Fig. 29(C) a back view. In Fig. 29(A), the belt 1 has a structure in which it extends from the flank of the left (right in the drawing) front side of the main body to the crotch area 1e of the lower part of the main body, the back portion and the right shoulder portion 1a, changes direction in the vicinity of the abdomen on the front side, extends to the left shoulder portion 1b, back portion and crotch area 1d and then develops into the right flank portion. Though not illustrated, the belt 1 may have a structure in which it extends from the flank of the left (right in the drawing) front side of the main body to the crotch area 1e of the lower part of the main body, the back portion and the left shoulder portion 1b, changes direction in the vicinity of the abdomen on the front side, extends to the right shoulder portion 1a, back portion and crotch area 1d and then develops into the right flank portion.

Furthermore, waist belts 34a, 34b that are sewn to the belt 1 in the vicinity of the waist side of the back portion of the main body and that develop to the left and right are provided. It is so arranged that the effective length of the waist belt 34 can be adjusted. The end of the crotch belt 1d is sewn to the waist belt 34a at the right flank and the end of the crotch belt 1e is sewn to the waist belt 34b at the left flank. A longitudinal belt 44 is wound around the waist belt 34 at the approximate central portion thereof, this end of the belt 44 is sewn to the belt 44, the other end is provided with the male connecting member 7 and this is made freely attachable to and detachable from the female connecting member 5 extending from above. Other structural details are similar to those described in conjunction with Fig. 16 (Fig. 24). However, since the portion that is to serve as the grasping belt 12b is used as the crotch belt 1e, a belt element is prepared anew and this is adopted as the grasping belt 12b. Further, the crotch belts 1d, 1e are provided with fused belt portions 1A, 1B, respectively.

When this auxiliary seat belt is put on, the right foot is passed between the waist belt 34a and crotch belt 1d and the left foot is passed between the waist belt 34b and crotch belt 1e. The main body of the auxiliary seat belt is then lifted up and placed on the torso. Furthermore, latching the connecting members 5, 7 completes the process for putting on the auxiliary seat belt. This auxiliary seat belt is such that in the event of a collision with a vehicle or the like, both ends of the crotch belts 1d, 1e are pulled in the directions of the left and right flanks. As a consequence, the auxiliary seat belt operates in such a manner that the crotch belts 1d, 1e depart from the crotch area of the user so that the crotch area of the user is not subjected to pressure directly. Further, at this time the crotch belts 1d, 1e are in such a positional relationship that the left and right thighs are restrained (supported) from the left and right legs of the user. As a result, the user's body is supported (restrained) at both legs and both buttocks. This is a supporting method that places a small load upon the body of the user.

Fig. 30 is a diagram useful in describing an auxiliary seat belt according to an eighth embodiment. Fig. 30(A) is a front view, Fig. 30(B) a right-side view and Fig. 30(C) a back view. In Fig. 30(A), the belt 1 has a structure in which it extends from the vicinity of the leg of the left (right in the drawing) back side of the main body to the right shoulder portion 1a, changes direction in the vicinity of the abdomen on the front side, extends to the left shoulder area 1b and develops into the right leg portion. The belt 1 that extends from the vicinity of the waist at the back of the main body to the side of the right leg will be referred to as a buttock belt 1d and the belt 1 that extends to the left leg will be referred to as a buttock belt 1e. Leg belts 46a, 46b that are fitted to the thighs of the user are provided in the vicinity of both leg portions of the belt 1. The leg belts 46a, 46b are bridged by an abdomen belt 48 the intermediate portion whereof can be made to extend to the vicinity of the abdomen portion at the front of the main body. The intermediate portion is provided with the male connecting member 7 for being latched with the female connecting member 5 that extends from the upper side.

The leg belts 46a, 46b in this example are made to conform to the typical thigh size of a user in advance and can be formed into the shape of a ring (which is jointless). Alternatively, if necessary an arrangement can be adopted in which the effective lengths of the leg belts 46a, 46b can be changed. Furthermore, the leg belts 46a, 46b are provided with buckles 50a, 50b, respectively, that are freely attachable and detachable. Other structural details are similar to those described in conjunction with Fig. 16 (Fig. 24) or Fig. 28. However, the buttock belts 1d, 1e are provided with fused belt portions 1A, 1B, respectively. If necessary, fused belt portions 48A, 48B may be provided on the side of the abdomen belts 48a, 48b. Further, the waist belt 34 may be provided, as illustrated in Fig. 30(B).

Fig. 31 is a diagram useful in describing an auxiliary seat belt according to an eighth embodiment. Here the body of the user at the time of an impact with a vehicle or the like is restrained to the main body of the auxiliary seat belt via both leg belts 46a, 46b. Accordingly, the force that supports the body weight (acceleration) thrown in the forward direction is divided into two portions so that the load that acts upon the user and upon the buttock belts 1d, 1e is alleviated. Impact applied to the crotch area of the user of the user also can be reliably prevented.

Fig. 32 is a diagram useful in describing an auxiliary seat belt according to a ninth embodiment. This illustrates a further case in which the auxiliary seat belt is equipped with two leg belts 46a, 46b. Fig. 32(A) is a front view, Fig. 32(B) a right-side view and Fig. 32(C) a back view. In Fig. 32(A), the belt 1 has a structure in which it extends from the vicinity of the leg of the left (right in the drawing) back side of the main body to the left shoulder portion 1b, changes direction in the vicinity of the abdomen on the front side, extends to the right shoulder area 1a and develops into the right leg portion. Other structural components may be similar to those described above in conjunction with Fig. 30. However, since the belt 1 does not cross at the back portion of the main body, the planar shape of the resilient member (structure) 20 has a correspondingly broadened lower side (to provide the shape of a rectangle, inverted trapezoid, etc.). Accordingly, the area overlapping to the existing seat belts 41a, 41b is increased so that the auxiliary seat belt can be restrained more stably. It should be noted that waist belt 34 may be provided, as shown in Fig. 32(B).

In each of the foregoing embodiments, a case in which the female connecting member 5 is attached to point C of belt 1 and the male connecting member 7 is attached to the end B is illustrated. Conversely, however, the male connecting member 7 may be attached to point C and the female connecting member 5 may be attached to the end B. Further, connecting members (buckles) 5, 7 having various other structures can be used.

Further, a case is illustrated in each of the foregoing embodiments in which the belt 1 constituting the skeletal structure comprises a single item of belt webbing. However, the auxiliary seat belt may be constructed by joining (as by sewing or riveting, etc.) a total of three belt segments, namely one for each of the two shoulder portions and one for the crotch area.

Further, in each of the foregoing embodiments, a case is illustrated in which the belt 1 (and other belts) constituting the skeletal structure comprises a single ply (layer) of belt webbing. However, a plurality of belt webbings may be superimposed, or belt webbing of long length may be folded over itself in the length direction, or belt webbing of large width may be folded over itself in the width direction, or belt webbing worked into a pipe shape in advance may be used. Further, various materials such as fabric, synthetic fibers or leather, etc., can be utilized as the belt webbing.

Further, in each of the foregoing embodiments, a specific example of an auxiliary seat belt for a child (of age three years) has been described. However, it goes without saying that if necessary, the size, etc. of the auxiliary seat belt can be changed so that the auxiliary seat belt can be applied not only to a child but also to a person of normal health or to an individual with a disability.

Further, the foregoing embodiments have been described along with specific examples of numerical values. However, it is obvious that the present invention is not limited to these examples of numerical values.

Though a plurality of embodiments have been described above, it goes without saying that the auxiliary seat belt according to the present invention can be constructed in various ways by combining the features of each of these embodiments.

Though a plurality of preferred embodiments of the present invention have been described, it goes without saying that the shape, manufacture and material of each component, as well as a combination of these, can be changed in various ways without departing from the idea of the present invention.

Thus, the auxiliary seat belt of the present invention, as described above, is compact, low in cost and easy to carry and can safely protect a child or the like from accidents by being used in combination with an existing seat belt on any seat of any vehicle. Thus, the auxiliary seat belt contributes greatly to traffic safety.

## Claims

1. An auxiliary seat belt used in cooperation with an existing seat belt for restraining the body of a user, **characterized by** having: a first belt member that passes over one shoulder from the vicinity of a waist side at a back portion of a main body, reverses direction in the vicinity of an abdomen portion at the front, passes over the other shoulder, is joined to itself in the vicinity of the waist side at the back portion and develops into an abdomen portion at the front upon passing through a crotch area at a lower portion of the main body; and a pair of freely attachable and detachable connecting members, one being provided on the portion of said first belt member at which said first belt member reverses direction at the abdomen, and the other being provided near the end of said first belt member that develops into the abdomen portion at the front upon passing through the crotch area.

2. An auxiliary seat belt used in cooperation with an existing seat belt for restraining the body of a user, **characterized by** having: a first belt member that passes over a crotch area at a lower portion of a main body, a back portion and either shoulder from one flank on a front side of the main body, reverses direction in the vicinity of an abdomen portion at the front, passes over the other shoulder, the back portion and the crotch area and develops into another flank; a second belt member that is joined to said first belt member in the vicinity of a waist side at the back portion of the main body, extends laterally and develops into the abdomen side, said second belt member being joined at points therealong to each end of said first belt member at both flanks; and a pair of freely attachable and detachable connecting members, one being provided on the portion of said first belt member at which said first belt member reverses direction at the abdomen, and the other being provided at an intermediate portion of said second belt member.

3. An auxiliary seat belt used in cooperation with an existing seat belt for restraining the body of a user, **characterized by** having: a first belt member that passes over either shoulder from the vicinity of one leg portion on a back side of a main body, reverses direction in the vicinity of an abdomen portion at the front, passes over the other shoulder and develops into the other leg; second and third belt members annularly provided on respective ones of the two leg portions of said first belt member; a fifth belt member bridging said third and fourth belt members and having an intermediate portion that is capable of developing into an abdomen portion on a front side of the main body; and a pair of freely attachable and detachable connecting members, one being provided on the portion of said first belt member at which said first belt member reverses direction at the abdomen, and the other being provided at the intermediate portion of said fifth belt member.

4. An auxiliary seat belt according to claim 1 or 3, **characterized by** further having a second belt member that is joined to the first belt member in the vicinity of a waist side at the back portion of the main body, extends laterally and develops into the abdomen side.

5. An auxiliary seat belt according to any one of claims 1 to 4, **characterized in that** the first belt member comprises a union of a plurality of belt members.

6. An auxiliary seat belt according to claim 2 or 4, **characterized in that** at least a portion of the second belt member is folded over in a direction crossing the longitudinal direction thereof, and opposing surfaces of said folded-over portion are joined together so as to be pulled apart by tension applied in the longitudinal direction.

7. An auxiliary seat belt according to any one of claims 1 to 6, **characterized in that** at least a portion of the second belt member is folded over in a direction substantially crossing the longitudinal direction thereof, and opposing surfaces of said folded-over portion are joined together so as to be pulled apart by tension applied in the longitudinal direction.

8. An auxiliary seat belt according to any one of claims 1 to 7, **characterized by** further having a plate-shaped resilient member that develops into a waist portion from the vicinity of both shoulders of the back portion of the main body and that exhibits elasticity in a bending direction, a back side thereof being supported in a forward-facing direction by the first belt member that develops into both shoulders of the main body.

9. An auxiliary seat belt according to claim 8, **characterized in that** the resilient member comprises a laminate of a plurality of plate-shaped members having different characteristics.

10. An auxiliary seat belt according to any one of claims 1 to 9, **characterized in that** the vicinity of a shoulder side of the back portion of the main body or the vicinity of the abdomen portion is provided with a belt passing member through which an existing seat belt is passed for restraining the seat belt to the side of the main body.
